(19) Europäisches Patentamt
European Patent Office
Office européen des brevets

(11) **EP 4 415 356 A1**

(12) **EUROPEAN PATENT APPLICATION**
published in accordance with Art. 153(4) EPC

(43) Date of publication:
**14.08.2024 Bulletin 2024/33**

(21) Application number: **23856358.9**

(22) Date of filing: **18.07.2023**

(51) International Patent Classification (IPC):
***H04N 17/00*** (2006.01)

(52) Cooperative Patent Classification (CPC):
**H04N 17/00**

(86) International application number:
**PCT/CN2023/107878**

(87) International publication number:
**WO 2024/041268 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.08.2022 CN 202211018116**

(71) Applicant: **Tencent Technology (Shenzhen)
Company Limited
Shenzhen, Guangdong, 518057 (CN)**

(72) Inventors:
• **GONG, Guiliang
  Shenzhen, Guangdong 518057 (CN)**
• **YI, Gaoxiong
  Shenzhen, Guangdong 518057 (CN)**

(74) Representative: **Nederlandsch Octrooibureau
P.O. Box 29720
2502 LS The Hague (NL)**

(54) **VIDEO QUALITY ASSESSMENT METHOD AND APPARATUS, AND COMPUTER DEVICE, COMPUTER STORAGE MEDIUM AND COMPUTER PROGRAM PRODUCT**

(57) A video quality assessment method and apparatus, and a computer device, a computer storage medium and a computer program product. The method comprises: playing an online video stream; during the process of playing the online video stream, on the basis of video playing smoothness, which is detected within at least one unit of duration, obtaining time-domain features within the corresponding unit of duration; extracting video frames from the online video stream, and respectively extracting spatial-domain features from the extracted video frames; obtaining a time-domain feature vector on the basis of the time-domain features within the unit of duration; obtaining a spatial-domain feature vector on the basis of the corresponding spatial-domain features of the video frames; and performing feature fusion processing on the spatial-domain feature vector and the time-domain feature vector, so as to obtain a corresponding fused feature vector, and determining a video quality assessment value of the online video stream on the basis of the fused feature vector.

FIG. 10

EP 4 415 356 A1

**Description**

RELATED APPLICATION

Embodiments of this application is based on and claims priority to Chinese Patent Application No. 202211018116.9, filed on August 24, 2022.

FIELD OF THE TECHNOLOGY

The present disclosure relates to the field of computer technologies, and in particular, to the field of video technologies. A video quality assessment method and apparatus, a device, and a computer storage medium are provided.

BACKGROUND OF THE DISCLOSURE

Online communication videos provide a convenient communication environment. Video quality determines user experience. The video quality is usually affected by many factors such as a terminal device, a physical environment, a network condition, and an encoder. Accurate video quality assessment is a prerequisite for downstream application such as codec tool optimization and low-quality scene analysis. In the related art, a communication video quality assessment method is mainly implemented by using an offline reference method. To be specific, outputted video quality is assessed by comparing a difference between expected input and actual output of the video, and a communication tool is reversely optimized.

However, in an actual scenario, online real-time video quality assessment is more in line with an actual effect and has practical value. However, because there is no reference source in a case that online communication video quality is assessed, input data only has actual communication video data, and a method with no reference can only be used, online video quality cannot be effectively measured.

SUMMARY

Embodiments of the present disclosure provide a video quality assessment method and apparatus, a computer device, a computer storage medium, and a computer program product for integrating features of an online video stream in spatial-domain and time-domain dimensions to express video quality of the online video stream, so that accuracy of video quality assessment is improved.

An embodiment of the present disclosure provides a video quality assessment method, including:

playing an online video stream;

obtaining a time-domain feature of corresponding time interval based on video playback fluency detected within at least one time interval in a process of playing the online video stream;

extracting video frames from the online video stream, and separately extracting a spatial-domain feature from each extracted video frame;

obtaining a time-domain feature vector based on the time-domain feature of the time interval, and obtaining a spatial-domain feature vector based on a corresponding spatial-domain feature of each video frame; and

performing feature fusion processing on the spatial-domain feature vector and the time-domain feature vector to obtain a corresponding fusion feature vector, and determining a video quality assessment value of the online video stream based on the fusion feature vector.

An embodiment of the present disclosure provides a method for training a video quality assessment model, including:

performing a plurality of times of iterative training on the video quality assessment model by using a plurality of video playback samples, performing the following operations at each time of iterative training:

extracting video frames from inputted video playback samples, separately performing spatial-domain feature extraction on each extracted video frame to obtain a corresponding spatial-domain feature, and obtaining a time-domain feature of corresponding time interval based on playback fluency within each time interval in the video playback samples;

obtaining a corresponding spatial-domain feature vector based on each obtained spatial-domain feature, and obtaining a time-domain feature vector based on each obtained time-domain feature;

performing feature fusion processing on the spatial-domain feature vector and the time-domain feature vector to obtain a corresponding fusion feature vector, and determining a video quality assessment value based on the fusion feature vector; and

determining a model loss value based on video quality real values and video quality assessment values of the plurality of video playback samples, and performing model parameter update based on the model loss value.

An embodiment of the present disclosure provides a video quality assessment apparatus, including:

a video playback unit, configured to play an online video stream;

a time-domain detection unit, configured to obtain a time-domain feature of corresponding time interval based on video playback fluency detected within at least one time interval in a process of playing the online video stream;

a spatial-domain detection unit, configured to extract video frames from the online video stream, and separately extract a spatial-domain feature from each extracted video frame,

the time-domain detection unit being further configured to obtain a time-domain feature vector based on the time-domain feature of the time interval, and

the spatial-domain detection unit being further configured to obtain a spatial-domain feature vector based on a corresponding spatial-domain feature of each video frame; and

a quality assessment unit, configured to perform feature fusion processing on the spatial-domain feature vector and the time-domain feature vector to obtain a corresponding fusion feature vector, and determine a video quality assessment value of the online video stream based on the fusion feature vector.

An embodiment of the present disclosure provides an apparatus for training a video quality assessment model, including:

a model training unit, configured to perform a plurality of times of iterative training on the video quality assessment model by using a plurality of video playback samples, the model training unit including:

a spatial-domain detection subunit, configured to extract video frames from inputted video playback samples, separately perform spatial-domain feature extraction on the extracted video frames to obtain corresponding spatial-domain features, and obtain a corresponding spatial-domain feature vector based on each obtained spatial-domain feature;

a time-domain detection subunit, configured to obtain a time-domain feature of corresponding time interval based on playback fluency within each time interval in the video playback samples, and obtain a time-domain feature vector based on each obtained time-domain feature;

a quality assessment subunit, configured to perform feature fusion processing on the spatial-domain feature vector and the time-domain feature vector to obtain a corresponding fusion feature vector, and determine a video quality assessment value based on the fusion feature vector; and

a parameter update subunit, configured to determine a model loss value based on video quality real values and video quality assessment values of the plurality of video playback samples, and perform model parameter update based on the model loss value.

An embodiment of the present disclosure provides a computer device, including a memory, a processor, and a computer program that is stored in the memory and runs on the processor, and the processor, when executing the computer program, implementing operations of any one of the foregoing methods.

An embodiment of the present disclosure further provides a computer storage medium, having a computer program stored thereon, and the computer program, when executed by a processor, implementing operations of any one of the foregoing methods.

An embodiment of the present disclosure provides a computer program product, including a computer program, and the computer program being stored in a computer-readable storage medium. A processor of a computer device reads the computer program from the computer-readable storage medium. The processor executes the computer program, so that the computer device performs operations of any one of the foregoing methods.

In embodiments of the present disclosure, during playing an online video stream, a time-domain feature vector and a spatial-domain feature vector are obtained. Feature fusion processing is performed on the spatial-domain feature vector and the time-domain feature vector, and a video quality assessment value of the online video stream is determined based on a fusion feature vector. It may be learned that in the embodiments of the present disclosure, features of an online video stream in both spatial-domain and time-domain dimensions are taken into account, and the features in the two dimensions are integrated to express video quality of the online video stream, so that accuracy of video quality assessment is improved.

BRIEF DESCRIPTION OF THE DRAWINGS

FIG. 1 is a schematic diagram of an application scenario according to an embodiment of the present disclosure.

FIG. 2 is an entire flowchart of video quality assessment according to an embodiment of the present disclosure.

FIG. 3 is a schematic flowchart of a method for training a video quality assessment model according to an embodiment of the present disclosure.

FIG. 4 is a schematic diagram of training data collection according to an embodiment of the present disclosure.

FIG. 5 is a schematic diagram of a structure of a video quality assessment model according to an embodiment of the present disclosure.

FIG. 6 is a schematic flowchart of another training according to an embodiment of the present disclosure.

FIG. 7 is a schematic diagram of an architecture using training sample groups for training according to an embodiment of the present disclosure.

FIG. 8 is a schematic diagram of quality range distribution of video playback samples according to an embodiment of the present disclosure.

FIG. 9 is a diagram of variation of rank_loss with a difference of quality prediction according to an embodiment of the present disclosure.

FIG. 10 is a schematic flowchart of a video quality assessment method according to an embodiment of the present disclosure.

FIG. 11 is a schematic diagram of continuously performing spatial-domain and time-domain feature extraction according to an embodiment of the present disclosure.

FIG. 12 is a schematic diagram of a structure of a MobileNet-v3-small model according to an embodiment of the present disclosure.

FIG. 13 is a schematic diagram of a structure of each bneck unit according to an embodiment of the present disclosure.

FIG. 14 is a schematic flowchart of a video quality assessment method of an online video stream according to an embodiment of the present disclosure.

FIG. 15 is a schematic flowchart of video quality assessment of an online video stream according to an embodiment of the present disclosure.

FIG. 16 is a schematic diagram of a structure of a video quality assessment apparatus according to an embodiment of the present disclosure.

FIG. 17 is a schematic diagram of a structure of an apparatus for training a video quality assessment model according to an embodiment of the present disclosure.

FIG. 18 is a schematic diagram of a composition structure of a computer device according to an embodiment of the present disclosure.

FIG. 19 is a schematic diagram of a composition structure of another computer device used in an embodiment of the present disclosure.

DESCRIPTION OF EMBODIMENTS

To make the objectives, technical solutions, and advantages of the present disclosure clearer, the technical solutions in embodiments of the present disclosure are clearly and completely described below with reference to the accompanying drawings. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure. The embodiments of the present disclosure and features in the embodiments may be mutually combined in a case that no conflict occurs. In addition, although logic sequences are shown in the flowcharts, in some cases, the shown or described steps may be performed in sequences different from those herein.

It may be understood that in the following specific implementations of the present disclosure, data related to an online video stream is involved. In a case that various embodiments of the present disclosure are applied to specific products or technologies, relevant permissions or consents are required. Collection, use, and processing of relevant data need to comply with relevant laws, regulations, and standards of relevant countries and regions.

For ease of understanding of the technical solutions provided in the embodiments of the present disclosure, some key terms used in the embodiments of the present disclosure are explained below first.

Online video stream: It refers to real-time video data. For example, a video in the embodiments of the present disclosure may be a real-time communication video, such as video communication and a video conference in instant messaging applications. Therefore, in this process, the video is played in the form of an online video stream. In other words, video data is received in real time and the video data is played in real time. In addition, its own video stream is sent to another party for playing to implement real-time video communication between at least two parties.

Spatial domain: It is also referred to as a space domain, that is, a pixel domain. Processing in the spatial domain is processing at a pixel level, such as overlap-add processing on a pixel-level image. In the field of video processing, the processing in the spatial domain, that is, for processing of a video image, a feature of the image is obtained, and image quality is represented.

Time domain: It is also referred to as a domain of time. In the time domain, an independent variable is time. To be specific, a horizontal axis of the time domain represents time, and a vertical axis of the time domain represents change of a signal. The time domain is used for describing values of the signal at different moments. In the field of video processing, a signal specifically refers to a freezing degree of a video. The time domain is used for describing values of the freezing degree of the video at different moments.

Gray-scale value-chroma (YUV) color space model: It is similar to a red-green-blue (RGB) model and the like. Both the two models are color space models. A difference is that different expression methods are used to express image information. The RGB model uses three primary colors of red, green, and blue in optics, and another color is blended by using different proportions of the three primary colors. "Y" in the YUV color space model represents luminance or luma, that is, a gray-scale value. "U" and "V" represent chrominance or chroma, are used for describing a color and saturation of an image, and are used for specifying a color of a pixel. It is precisely because YUV is a format that expresses a gray-scale value and chroma separately, so that the two do not interfere with each other. In addition, because human perception is not sensitive to chroma, during encoding a photo or a video, a chroma sampling rate may be reduced without greatly affecting image quality to reduce a chroma bandwidth. Therefore, YUV is usually used in various video processing components. For example, video transmission in an online video mostly uses the YUV color space model.

The embodiments of the present disclosure relate to artificial intelligence and machine learning (ML) technologies, and are mainly designed based on machine learning in the artificial intelligence.

Artificial intelligence (AI) is a theory, a method, a technology, and an application system that use a digital computer or a machine controlled by the digital computer to simulate, extend, and expand human intelligence, perceive an environment, obtain knowledge, and use knowledge to obtain an optimal result. In other words, the artificial intelligence is a comprehensive technology in computer science and attempts to understand the essence of intelligence and produce a new intelligent machine that can react in a manner similar to human intelligence. The artificial intelligence is to study the design principles and implementation methods of various intelligent machines, to enable the machines to have the functions of perception, reasoning, and decision-making.

Computer vision (CV) technology is a science that studies how to use a machine to "see", and that the computer further refers to use a camera and a computer instead of human eyes to implement machine vision, such as recognition and measurement of a target, and further perform graphic processing, so that the computer processes the target into an image more suitable for human eyes to observe, or an image transmitted to an instrument for detection. As a scientific discipline, the computer vision technology studies related theories and technologies, and attempts to establish an artificial intelligence system that can obtain information from images or multidimensional data. The computer vision technology generally includes technologies such as image processing, image recognition, image semantic understanding, image retrieval, optical character recognition (OCR), video processing, video semantic understanding, video content/behavior recognition, three-dimensional object reconstruction, a 3D technology, virtual reality, augmented reality, synchronous positioning and map construction, autonomous driving, and smart transportation, and further includes biometric feature recognition technologies such as common face recognition and fingerprint recognition.

The machine learning is a core of the artificial intelligence, is a basic way to make the computer intelligent, and is applied to various fields of the artificial intelligence. The machine learning and deep learning generally include technologies such as an artificial neural network, a belief network, reinforcement learning, transfer learning, and inductive learning. An artificial neural network (ANN) abstracts a human brain neuron network from a perspective of information processing, establishes a specific simple model, and forms different networks according to different connection methods. A neural network is a computing model formed by a large quantity of nodes (or neurons) connected to each other. Each node represents a specific output function and is referred to as an activation function. A connection between every two nodes represents a weighted value for a signal passing through the connection, referred to as a weight. This is equivalent to a memory of the artificial neural network. Output of the network varies depending on a connection method of the network, a weight value, and the activation function. The network itself is generally an approximation of a specific algorithm or function in nature, or may be an expression of a logical policy.

With research and progress of an artificial intelligence technology, the artificial intelligence technology is studied and applied in a plurality of fields such as a common smart home, a smart wearable device, a virtual assistant, a smart speaker, smart marketing, self-driving, autonomous driving, an unmanned aerial vehicle, a robot, smart medical care, a smart customer service, Internet of Vehicles, autonomous driving, and smart transportation. It is believed that with the development of technologies, the artificial intelligence technology is applied in more fields and play increasingly important value.

The solutions provided in the embodiments of the present disclosure relate to the machine learning of the artificial intelligence and technologies such as the computer vision technology. For example, in a case that quality assessment is performed on the online video stream, an artificial neural network model based on deep learning is needed. The artificial neural network model is constructed based on the computer vision technology. To be specific, the embodiments of the present disclosure use a machine learning method to obtain a video quality assessment model for quality assessment on the online video stream. The video quality assessment model achieves a capability to process and understand spatial-domain and time-domain features of the online video stream based on the machine learning and the computer vision technology, so that online video stream quality is measured based on this to obtain a quality assessment value of the online video stream.

Video quality assessment in the embodiments of the present disclosure may be divided into two parts, including a training part and an application part. The training part relates to the field of machine learning technologies. In the training part, the artificial neural network model (that is, the video quality assessment model mentioned later) is trained by using the machine learning technology. The artificial neural network model is trained based on a video playback sample, and a parameter of the artificial neural network model is continuously adjusted by using an optimization algorithm until the artificial neural network model converges. In the application part, the artificial neural network model obtained by training in the training part is used to perform quality assessment on the online video stream during actual use. In addition, the artificial neural network model in the embodiments of the present disclosure may be trained online or offline. This is not specifically limited herein. In this specification, offline training is used as an example.

A design idea of the embodiments of the present disclosure is briefly described below.

Main difficulties in assessing online communication video quality are as follows.

First, because there are many models of terminal devices and each model has different computing capabilities, a video quality assessment algorithm needs to occupy as little storage and computing resources as possible in a case that an accuracy requirement is satisfied, to adapt to various models of terminal devices.

Second, the video quality assessment algorithms in related art defaults that a video is smooth, so that video quality cannot be measured accurately.

Based on this, embodiments of the present disclosure provide a video quality assessment method and apparatus, a device, and computer storage medium. The method includes a lightweight spatio-temporal fusion real-time communication video quality assessment (LST-RTC VQA) algorithm, and includes: obtaining a time-domain feature of corresponding time interval based on video playback fluency detected within each time interval in a process of playing an online video stream; extracting video frames from the online video stream, and separately performing spatial-domain feature extraction on each extracted video frame (that is, a plurality of video frames or all video frames) to obtain a corresponding spatial-domain feature of each video frame; obtaining a time-domain feature vector based on each obtained time-domain feature, and obtaining a corresponding spatial-domain feature vector based on each obtained spatial-domain feature; and performing feature fusion processing on the spatial-domain feature vector and the time-domain feature vector to obtain a corresponding fusion feature vector, and determining a video quality assessment value of the online video stream based on the fusion feature vector. It may be learned that in the embodiments of the present disclosure, features of an online video stream in both spatial-domain and time-domain dimensions are taken into account, and the features in the two dimensions are integrated to express video quality of the online video stream, so that accuracy of video quality assessment is improved. In addition, the embodiments of the present disclosure further implement real-time quality assessment of the online video stream, to improve real-time performance of quality assessment on the online video stream and facilitate assisting of optimization of the online video stream.

In addition, considering that the real-time quality assessment is applied to a video receive end, to not affect the online video quality as much as possible, video quality assessment is to occupy as little computing resources as possible. Therefore, in the embodiments of the present disclosure, in a case that spatial-domain feature extraction is performed, feature extraction may be performed on a Y channel in a video stream in a YUV format to loss a small part of accuracy in exchange for only 1/3 of original computing amounts. In addition, for a time-domain dimension, to improve a computing speed, the embodiment of the present disclosure marks a smooth frame with 1 and a freezing frame with 0 to form a time-domain binary stream as time-domain data input.

The following is a brief description to an application scenario applicable to the technical solutions of embodiments of the present disclosure. The application scenario described below is merely intended to describe the embodiments of the present disclosure, but is not intended to limit the present disclosure. During a specific implementation process, the technical solutions provided in the embodiments of the present disclosure may be flexibly applied according to an actual requirement.

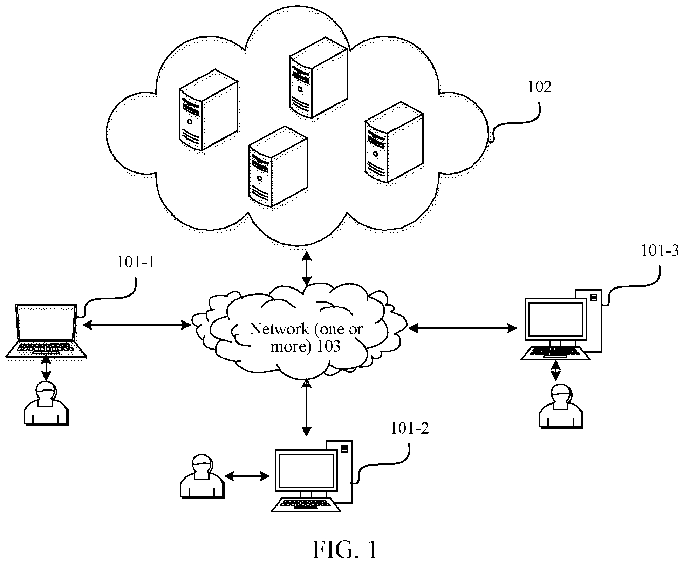

The embodiments of the present disclosure may be applied to various scenarios, including but not limited to a cloud technology, artificial intelligence, smart transportation, driver assistance, and the like. The solutions provided in the embodiments of the present disclosure may be applied to a video quality assessment part included in these scenarios, such as video quality assessment on video communication in an instant messaging application, an online video conference, and the like. FIG. 1 is a schematic diagram of an application scenario according to an embodiment of the present disclosure. In the scenario, a terminal device and a server 102 may be included. There may be a plurality of terminal devices, such as a terminal device 101-1, a terminal device 101-2 and a terminal device 101-3 shown in FIG. 1. Certainly, a quantity of the terminal devices is not limited. In the embodiment of the present disclosure, a direct or indirect communication connection may be performed between each terminal device and the server 102 via one or more networks 103. The network 103 may be a wired network or a wireless network. For example, the wireless network may be a mobile cellular network or a wireless-fidelity (Wi-Fi) network, and certainly, may alternatively be another possible network. This is not limited in embodiments of the present disclosure.

The terminal device may be any computer device with video communication and a video quality assessment capability, such as a mobile phone, a tablet computer (PAD), a notebook computer, a desktop computer, an intelligent voice interaction device, a smart appliance, a smart vehicle-mounted device, an aircraft, and a smart wearable device. A video communication application such as an instant messaging application and an online videoconferencing application may be installed on the terminal device. An application involved in the embodiments of the present disclosure may be a software client, or a client such as a web page or an applet. The server 102 is a server corresponding to software, the web page, the applet, and the like. A specific type of the client is not limited. The server 102 is a back-end server of a video communication application. The server 102 may be, for example, an independent physical server, a server cluster or a distributed system composed of a plurality of physical servers, or a cloud server that provides a basic cloud computing service such as a cloud service, a cloud database, cloud computing, a cloud function, cloud storage, a network service, a cloud communication, a middleware service, a domain name service, a security service, a content delivery network (CDN), and a big data and artificial intelligence platform, but is not limited thereto.

The video quality assessment method in the embodiment of the present disclosure may be performed by the terminal device alone, by the server 102 alone, or by the server 102 and the terminal device jointly.

An example in which the terminal device performs the video quality assessment method alone is used. The terminal device obtains a time-domain feature of corresponding time interval based on video playback fluency detected within each time interval in a process of playing an online video stream; extracts video frames from the online video stream, and separately performs spatial-domain feature extraction on each extracted video frame to obtain a corresponding spatial-domain feature of each video frame; obtains a time-domain feature vector based on each obtained time-domain feature, and obtaining a corresponding spatial-domain feature vector based on each obtained spatial-domain feature; and performs feature fusion processing on the spatial-domain feature vector and the time-domain feature vector to obtain a corresponding fusion feature vector, and determines a video quality assessment value of the online video stream based on the fusion feature vector.

An example in which the server 102 performs the video quality assessment method alone is used. The terminal device records an online video stream played by itself in real time and sends the online video stream to the server 102. Then, the server 102 performs the video quality assessment method. The server 102 obtains a time-domain feature of corresponding time interval based on video playback fluency detected within each time interval; extracts video frames from the online video stream, and separately performs spatial-domain feature extraction on each extracted video frame to obtain a corresponding spatial-domain feature of each video frame; obtains a time-domain feature vector based on each obtained time-domain feature, and obtains a corresponding spatial-domain feature vector based on each obtained spatial-domain feature; and performs feature fusion processing on the spatial-domain feature vector and the time-domain feature vector to obtain a corresponding fusion feature vector, and determines a video quality assessment value of the online video stream based on the fusion feature vector.

An example in which the terminal device and the server 102 perform the video quality assessment method jointly is used. The terminal device obtains a time-domain feature of corresponding time interval based on video playback fluency detected within each time interval; extracts video frames from the online video stream, and separately performs spatial-domain feature extraction on each extracted video frame to obtain a corresponding spatial-domain feature of each video frame; sends the corresponding spatial-domain features of the video frame to the server 102. Further, the server 102 obtains a time-domain feature vector based on each obtained time-domain feature and obtains a corresponding spatial-domain feature vector based on each obtained spatial-domain feature, and performs feature fusion processing on the spatial-domain feature vector and the time-domain feature vector to obtain a corresponding fusion feature vector, and determines a video quality assessment value of the online video stream based on the fusion feature vector.

In a possible implementation, the video quality assessment method provided in embodiments of the present disclosure may be applied to an online videoconferencing scenario. In the scenario, a plurality of video receive ends are involved, and video quality assessment may be performed at each video receive end. In addition, because online video stream data that needs to be collected and analyzed on the video receive end is involved in the foregoing video quality assessment, to implement a video quality assessment, a user of each video receive end may be requested to authorize a collection permission of relevant data. Further, with the permission, frame extraction is performed on the online video stream played on the video receive end to extract a spatial-domain feature, and a time-domain feature within each time interval is determined in real time, to further comprehensively assess the video quality by integrating the spatial-domain and time-domain features, so that accuracy of video quality assessment is improved.

An implementation process of the video quality assessment method provided in the embodiment of the present disclosure in other video communication scenarios is similar to that of the foregoing online videoconferencing scenario. Therefore, details are not described herein again.

The video quality assessment method provided in the exemplary implementations of the present disclosure is described below in combination with the above-described application scenario and the accompanying drawings. The above application scenario is only shown to facilitate understanding the principles of the present disclosure. The implementations of the present disclosure are not limited in this aspect.

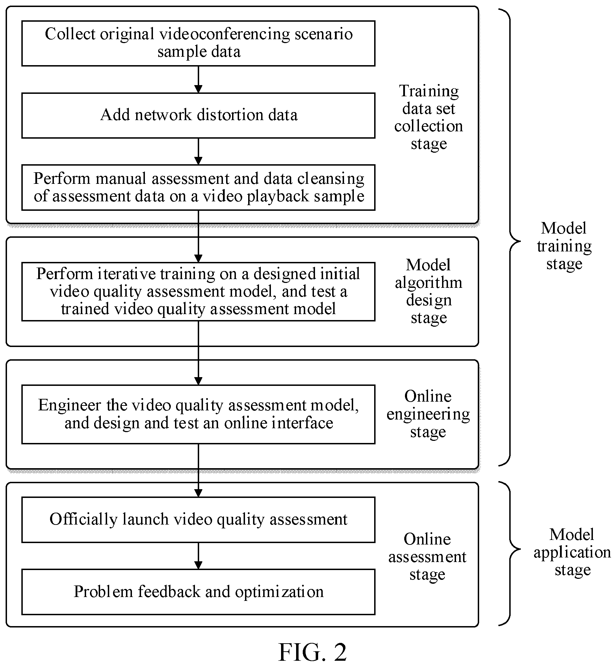

FIG. 2 is an entire flowchart of video quality assessment according to an embodiment of the present disclosure. In the process, a model training stage and a model application stage are included. The model training stage includes stages, such as training data set collection, a model algorithm design, and online engineering. Using an online videoconferencing scenario as an example, in the training data set collection stage, original videoconferencing scenario sample data is collected, and network distortion data is added to obtain a video playback sample with a network distortion, to simulate to obtain a corresponding video playback sample in different network distortion environments. In addition, manual assessment and data cleansing of assessment data are performed on the video playback sample to obtain an assessment value that may be used for training. In the model algorithm design stage, iterative training is performed on a designed initial video quality assessment model by using the obtained video playback sample until the model reaches a convergence condition. In addition, a trained video quality assessment model is tested, and may be actually used online in a case that the test reaches a standard. In the online engineering stage, after the video quality assessment model is engineered and an online interface is designed and tested, the video quality assessment is officially launched, and a problem in an online quality assessment process is fed back and optimized to further optimize the video quality assessment model.

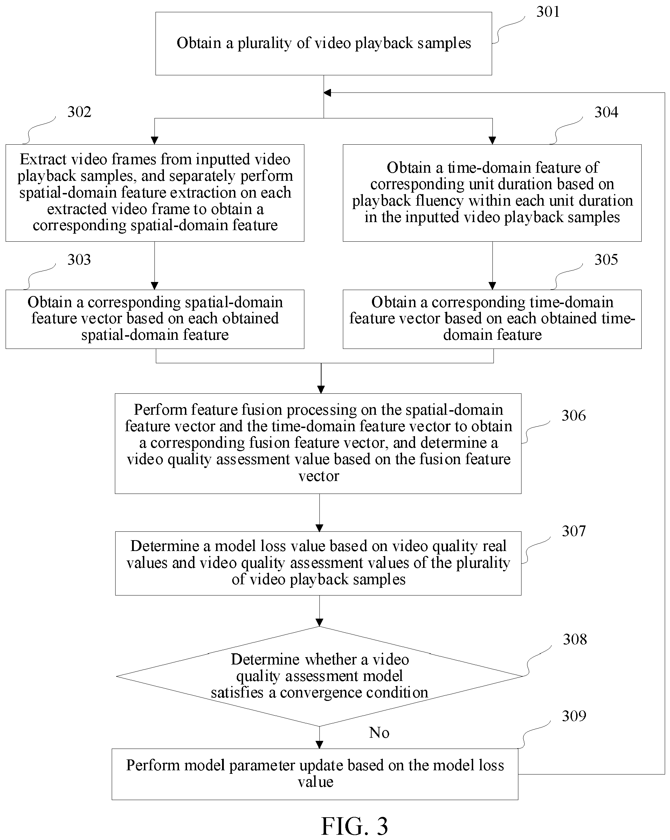

The stages are separately described below. Because the model needs to be trained in advance before officially putting into use, a training process of the video quality assessment model is described here first. FIG. 3 is a schematic flowchart of a method for training a video quality assessment model according to an embodiment of the present disclosure. The method may be performed by a terminal device or a server. A specific implementation flow of the method is as the following step 301 to step 309.

Step 301: Obtain a plurality of video playback samples.

In the embodiment of the present disclosure, video playback samples may be formed by collecting video playback data in a real scenario and manually assessing.

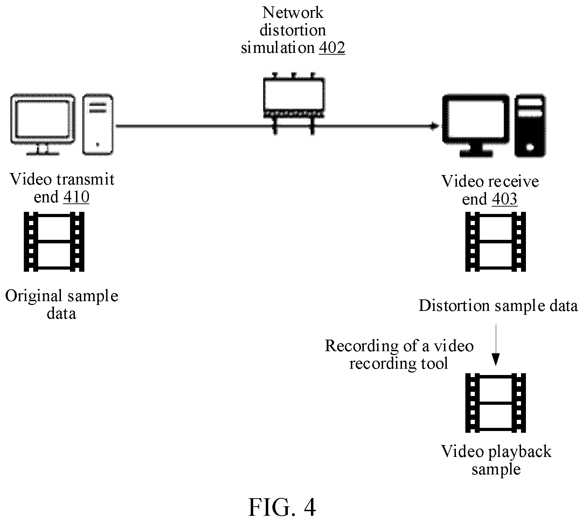

The plurality of video playback samples are obtained by recording an original video stream played by a video receive end under different video distortion simulation environments. Using an online videoconferencing scenario as an example, an original video stream is original conference scenario sample data. A plurality of pieces of original conference scenario sample data is first collected. Each piece of original conference scenario sample data is a short-duration conference video. For example, more than 250 conference videos with eight seconds to ten seconds may be collected. In an actual scenario, due to influence of a device or a network, a specific distortion to a video inevitably occurs during video transmission or video decoding and playing. Therefore, a plurality of types of (at least two) network distortions may be pre-designed, more than 20 types of network distortions, such as different videoconferencing software, speed limits at all levels, jitter, packet loss, and a combined distortion (that is, a distortion obtained by combining a plurality of distortions). Therefore, to obtain a real video playback sample at the video receive end, a video playback sample with these network distortions is added. Refer to FIG. 4. In an embodiment of the present disclosure, a video transmit end 401 uses a virtual camera to participate in a video conference to play original sample data in a real scenario, and different network distortions are added to the original sample data in pre-designed different network distortion environments via network distortion simulation 402. Distortion sample data is presented at a video receive end 403 (in other words, the original sample data with a network distortion is added). In addition, video playback samples may be obtained by recording with a video recording tool (in other words, the original sample data with a network distortion is added). For example, the video recording tool such as ffmpeg may be used for recording.

For the obtained video playback samples, subjective scoring may be performed by using manual assessment. For example, 200 people may perform subjective scoring on the obtained video playback samples by using crowdsourcing scoring, ensuring that each video playback sample has rating data of more than 30 people to obtain effective average score statistics. Average score statistics of each video playback sample is used as a video quality real value of the video playback sample.

In the embodiments of the present disclosure including the embodiments of both the claims and the specification (hereinafter referred to as "all embodiments of the present disclosure"), , in the foregoing scoring process, for each video playback sample, cleaning (which may be a deletion operation) is preferably performed on scoring deviation data (an outlier) by using scoring distribution analysis, group scoring consistency, and deviation error analysis, and the like, to collect statistics about an average score of cleaned scoring data, and use the average score of each video playback sample as mean opinion score (MOS) data corresponding to each video playback sample. The scoring deviation data is scoring data of which difference from other scoring data is greater than a set threshold in the video playback sample. For example, the video playback sample has three pieces of scoring data, that is, 10, 11, and 20. If a difference between 20 and 11 is greater than a set threshold 5, 20 is the score deviation data.

In all embodiments, to avoid scoring errors, redundant videos may alternatively be provided in the video playback samples that each scorer needs to assess during a crowdsourcing scoring process. In other words, there are duplicate video playback samples in the video playback samples that each scorer needs to assess. After scoring data of the scorer is obtained, scoring consistency verification is performed based on the pre-set redundant videos. To be specific, it is verified whether scores of the scorer are consistent for the duplicate videos. If the scores of the scorer are inconsistent, it indicates that scoring data of the scorer is invalid and the scoring data of the scorer is deleted. If the scores of the scorer are consistent, after being used for subsequent data cleaning, scoring data of the scorer may be used as a data basis for calculating a MOS corresponding to each video playback sample.

According to the foregoing processing, a sample data set used for model training may be obtained. For example, for the foregoing more than 250 conference videos with eight seconds to ten seconds (combined with 20 types of network distortions), more than 4926 sample data sets including video playback samples may be obtained finally. A video quality real value corresponding to each video playback sample is the foregoing MOS.

In the embodiment of the present disclosure, the plurality of video playback samples obtained above may be used to perform a plurality of times of iterative training. Because iterative processes are similar, an iterative process is used as an example for a detailed description here. During each iteration, the following operations are performed on inputted video playback samples at this time.

Step 302: Extract video frames from the inputted video playback samples, separately perform spatial-domain feature extraction on each extracted video frame to obtain a corresponding spatial-domain feature.

In the embodiment of the present disclosure, a video quality assessment model may extract video frames from the inputted video playback samples, and separately perform spatial-domain feature extraction on each extracted video frame (that is, a plurality of video frames or all video frames) to obtain a corresponding spatial-domain feature. The spatial-domain feature is a feature including spatial-domain information that represents the video frames. A model structure of the video quality assessment model is not limited in the embodiment of the present disclosure. The video quality assessment model may be a deep neural network, a convolutional neural network, or the like.

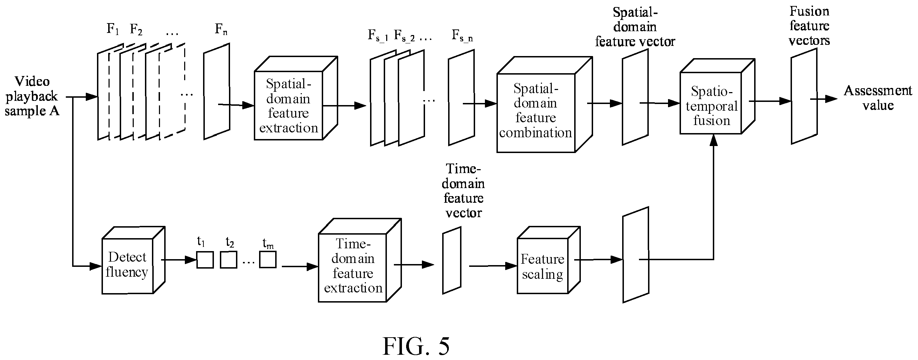

FIG. 5 is a schematic diagram of a structure of a video quality assessment model according to an embodiment of the present disclosure. The video quality assessment model includes two branches (that is, a spatial-domain branch and a time-domain branch). Processing processes performed on video playback samples are similar, so that a video playback sample A is used as an example for description here.

For example, video frames are extracted from the video playback sample A. As shown in FIG. 5, video frames $F_1$ to $F_n$ are extracted from the video playback sample A, and spatial-domain feature extraction is performed on the extracted video frames to obtain corresponding spatial-domain features, that is, $F_{s\_1}$ to $F_{s\_n}$ shown in FIG. 5.

In a possible implementation, in the embodiment of the present disclosure, N frames may be extracted by using a manner of randomly extracting frames at equal intervals, and may be used as input of spatial-domain data (that is, video frames used for extracting the spatial-domain features).

In the embodiment of the present disclosure, spatial-domain feature extraction may use any possible image feature extraction model, such as a visual geometry group (VGG) 16, a residual network (ResNet), a dense convolutional network (DenseNet), or a mobile network (MobileNet). This is not limited herein.

In a possible implementation, considering processing efficiency and processing burden of a video receive end, the embodiment of the present disclosure may use a light MobileNet-v3-small model as a spatial-domain feature extraction network (an image feature extraction model for spatial-domain feature extraction). To further reduce the processing processes, the embodiment of the present disclosure uses first front seven layers of the MobileNet-v3-small model as a basic network for spatial-domain feature extraction.

The MobileNet decomposes a general convolution into a depthwise separable convolution and $1 \times 1$ convolution. The depthwise separable convolution refers to that each channel of an inputted feature map corresponds to one convolution kernel. In this way, each channel of an outputted feature is only related to the channel corresponding to the inputted feature map. The depthwise separable convolution operation can significantly reduce a model size and a computing amount. The MobileNet-v3-small model has a depthwise separable convolution feature of MobileNetV1, the inverted residual with linear bottleneck of MobileNetV2, and a light attention model structure, and uses an activation function h-swish to replace an activation function swish in the MobileNet-v3-small model.

Step 303: Obtain a corresponding spatial-domain feature vector based on each obtained spatial-domain feature.

In all embodiment of the present disclosure, after the respective corresponding spatial-domain features of the extracted N frames are obtained, as shown in FIG. 5, a spatial-domain feature combination operation may be preferably performed to obtain a corresponding spatial-domain feature vector. In other words, element-wise addition is performed on the respective corresponding spatial-domain features of the N frames to obtain the corresponding spatial-domain feature vector. For example, if a spatial-domain feature corresponding to a video frame is a $10 \times 10$ matrix, element-wise addition is performed on the respective corresponding spatial-domain features of the N frames to obtain a $10 \times 10$ spatial-domain feature vector.

Step 304: Obtain a time-domain feature of corresponding time interval based on playback fluency within each time interval in inputted video playback samples.

In all embodiments of the present disclosure, the time interval may be specified according to an actual situation, for example, may be preferably specified according to a frame rate of a video playback sample. As shown in FIG. 5, in a case that a frame rate of the video playback sample A is 30 frames per second, time interval may be duration occupied by each frame, that is, 1/30 second. Certainly, the time interval may alternatively be specified in another manner. This is not limited in the embodiment of the present disclosure.

In all embodiments of the present disclosure, it may preferably be determined whether the video playback sample A is freezing within each time interval, and then each time interval is marked. A time-domain feature of the time interval is marked as a first value in a case that it is determined that a freezing result is smooth. A time-domain feature of the time interval is marked as a second value in a case that it is determined that a freezing result is freezing. For example, in a case that a freezing result of the video playback sample A within time interval is smooth, a time-domain feature of the time interval is marked as 1. In a case that a freezing result of the video playback sample A within time interval is freezing, a time-domain feature of the time interval is marked as 0.

Step 305: Obtain a corresponding time-domain feature vector based on each obtained time-domain feature (that is, a plurality of time-domain features or all time-domain features).

For example, the obtained time-domain features corresponding to the time interval, that is, $t_1$ to $t_m$ shown in FIG. 5, are arranged in an order of the time interval, a time-domain feature sequence (that is, a time-domain binary stream) synchronized with a playback progress may be obtained, and feature extraction is performed on the time-domain binary stream to obtain a corresponding time-domain feature vector.

Step 306: Perform feature fusion processing on the spatial-domain feature vector and the time-domain feature vector to obtain a corresponding fusion feature vector, and determine a video quality assessment value based on the fusion feature vector.

Refer to FIG. 5. Considering that dimensions of the spatial-domain feature vector and the time-domain feature vector may be inconsistent, a feature scaling operation may be performed on the time-domain feature vector, so that a dimension of a scaled time-domain feature vector is consistent with the dimension of the spatial-domain feature vector.

Then, feature fusion processing is performed on the scaled time-domain feature vector and the spatial-domain feature vector to obtain a corresponding fusion feature vector. In other words, element-wise addition is performed on the scaled time-domain feature vector and the spatial-domain feature vector to obtain the corresponding fusion feature vector.

Step 307: Determine a model loss value based on video quality real values and video quality assessment values of the plurality of video playback samples.

In the embodiment of the present disclosure, the model loss value may be calculated by using any possible loss function, such as a cross-entropy loss function, a zero-one loss function, or a mean absolute error loss (L1_loss) function.

Step 308: Determine whether the video quality assessment model satisfies a convergence condition.

In the embodiment of the present disclosure, the convergence condition may include at least one of the following: (1) the model loss value is not greater than a preset loss value threshold; and (2) a quantity of iterations reaches a preset quantity threshold.

Step 309: If the determined result in step 308 is "No", perform model parameter update based on the model loss value, and use an updated video quality assessment model to enter a next training process until the video quality assessment model satisfies the convergence condition. The training process ends if the determination result of step 308 is "Yes".

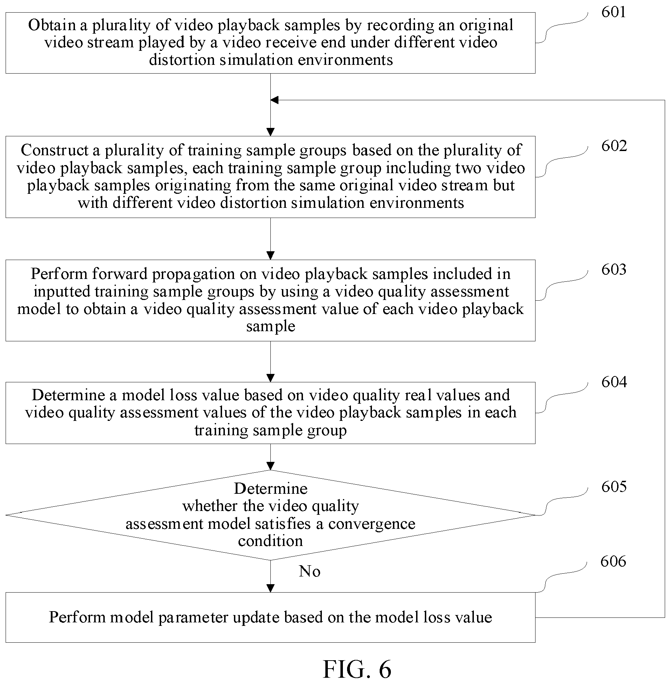

In the embodiment of the present disclosure, to exclude a situation in which the video quality assessment model only learns monotonous quality information in video content and a video quality assessment result is caused to be inaccurate, for example, the video content may be the same, but predicted video quality assessment values are different, the embodiment of the present disclosure uses a plurality of training sample groups. Each training sample group includes two video playback samples originating from the same original video stream but with different video distortion simulation environments. A rank training learning idea is used to participate in the training process. FIG. 6 is a schematic flowchart of another training according to an embodiment of the present disclosure, as shown in the following step 601 to step 606.

Step 601: Obtain a plurality of video playback samples by recording an original video stream played by a video receive end under different video distortion simulation environments.

Step 602: Construct a plurality of training sample groups based on the plurality of video playback samples, each training sample group including two video playback samples originating from the same original video stream but with different video distortion simulation environments.

For example, there are a plurality of video playback samples from the same original video stream in different video distortion simulation environments among these video playback samples, so that these same original video playback samples may be combined in pair to obtain corresponding training sample groups. Further, these training sample groups are used to perform a plurality of times of iterative training on the video quality assessment model, so that each input is the plurality of training sample groups.

Step 603: Perform forward propagation on the video playback samples included in the inputted training sample groups by using the video quality assessment model to obtain video quality assessment values of the video playback samples (that is, the plurality of video playback samples or all video playback samples).

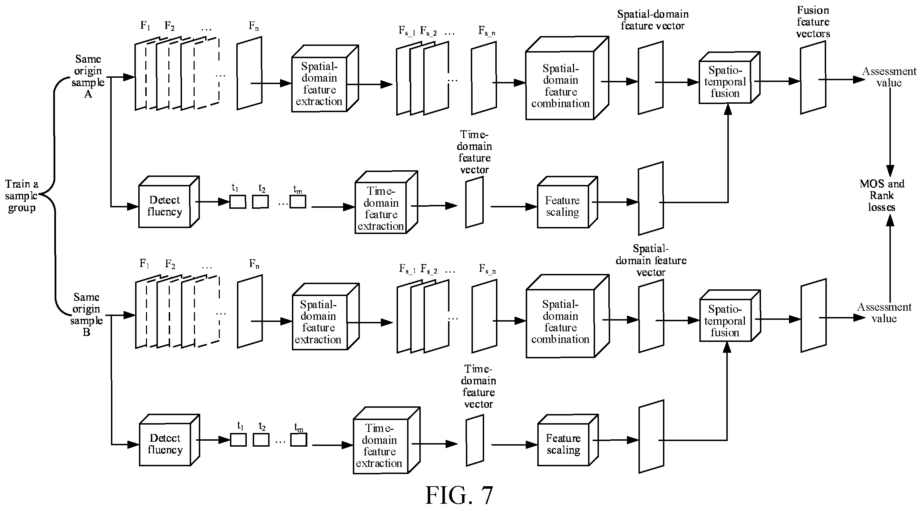

FIG. 7 is a schematic diagram of an architecture using training sample groups for training. Each training sample group includes a same origin sample A and a same origin sample B. Parameters of the video quality assessment model respectively corresponding to the same origin sample A and the same origin sample B are the same. Further, forward propagation is separately performed on the same origin sample A and the same origin sample B by using the video quality assessment model to obtain a video quality assessment value of the same origin sample A and a video quality assessment value of the same origin sample B.

Because a process of the forward propagation is similar to the embodiment shown in FIG. 3, for description, refer to the embodiment in FIG. 3. Details are not described again herein.

Step 604: Determine a model loss value based on video quality real values and video quality assessment values of the video playback samples in the training sample groups (that is, a plurality of training sample groups or all training sample groups).

For example, a model loss value for this training is determined based on a difference between video quality real values and a difference between video quality assessment values of two video playback samples in each training sample group.

In all embodiments, step 604 may be preferably implemented by the following manner: determining a quality assessment loss value based on the video quality real values and the video quality assessment values of the video playback samples (that is, a plurality of video playback samples or all video playback samples); determining a quality rank real value of the training sample group based on video quality real values of the two video playback samples in each training sample group (that is, a plurality of training sample groups or all training sample groups), and determining a quality rank loss value based on a difference between video quality assessment values of the two video playback samples as well as the quality rank real value; determining a quality classification loss value based on a difference between a video quality real value and a video quality assessment value of each video playback samples; and determining the model loss value based on the quality assessment loss value, the quality rank loss value, and the quality classification loss value.

For example, after the quality assessment loss value, the quality rank loss value, and the quality classification loss value are determined, weighted summation may be performed on the quality assessment loss value, the quality rank loss value, and the quality classification loss value to obtain the model loss value. For example, the following Formula (1) may be used to determine the model loss value Loss for this training:

$$\text{Loss} = l_1\_loss + 0.5 \, rank\_loss + 0.001 \, classffication\_loss \tag{1}$$

$l_1\_loss$ indicates a quality assessment loss value of each video playback sample in the training sample groups, and may be determined based on the video quality real values and the video quality assessment values of the video playback samples (that is, a plurality of video playback samples or all video playback *samples).rank_loss* indicates a quality rank loss value. A quality rank real value of the training sample group may be determined based on video quality real values of the two video playback samples in each training sample group, and the quality rank loss value is determined based on a difference between video quality assessment values of the two video playback samples as well as the quality rank real value. *classffication_loss* indicates a quality classification loss value, and may be determined based on a difference between the video quality real values and the video quality assessment values of the video playback samples.

The following describes the quality assessment loss value $l_1\_loss$ of the video playback samples in the training sample groups in Formula (1).

In the embodiment of the present disclosure, the model loss value of this training may be determined based on ranking of the video quality real values and ranking of the video quality assessment values of the video playback samples in the training sample groups. For example, in the ranking of the video quality real values, the same origin sample A is located in front of the same origin sample B. In theory, in the ranking of the video quality assessment values, the same origin sample A is to be located in front of the same origin sample B, so that model parameter may be constrained based on this.

In a possible implementation, $l_1\_loss$ may be calculated by using the following Formula (2):

$$l_1\_loss = \frac{1}{N} \sum_{i=1}^{N} |y_i - f(x_i)| \tag{2}$$

$y_i$ indicates a video quality real value of a video playback sample. $f(x_i)$ indicates a video quality assessment value of a video playback sample. N indicates a quantity of video playback samples inputted this time. Certainly, the quality assessment loss value may alternatively be calculated in another manner, such as a cross-entropy loss function or a zero-one loss function. This is not limited in the embodiment of the present disclosure.

The following describes the quality rank loss value *rank_loss* of the training sample group in Formula (1).

*rank_loss* may be determined based on the ranking of the video quality real values and the ranking of the video quality assessment values of the video playback samples in each training sample groups.

In all embodiments, a quality rank real value of the training sample group may be preferably determined based on video quality real values of two video playback samples in each training sample group, and a quality rank loss value of the training sample group is determined based on a difference between video quality assessment values of the two video playback samples as well as the quality rank real value.

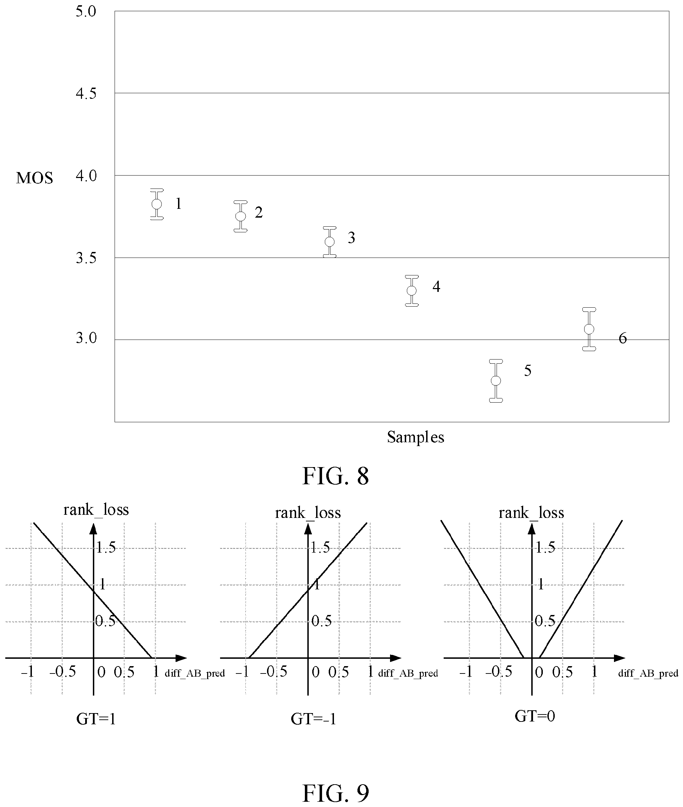

As an example of determining the quality rank real value, in a case that a quality rank label (that is, the true quality rank real value) of each training sample group is designed, a quality score range, that is, [MOS - 1.96$\delta$, MOS + 1.96$\delta$], of a single video playback sample in each training sample group is determined based on a preset confidence (using 95% as an example). FIG. 8 is a schematic diagram of quality score range distribution of video playback samples. It may be learned that upper limits and lower limits of quality score ranges of different video playback samples are different, and the quality rank label may be set by using the following Formula (3):

$$A - B \text{ MOS rank label} \begin{cases} 1, & \text{MOS}_A - 1.96\delta_A > \text{MOS}_B + 1.96\delta_B \\ -1, & \text{MOS}_A + 1.96\delta_A < \text{MOS}_B - 1.96\delta_B \\ 0, & \text{other} \end{cases} \tag{3}$$

In a case that a lower limit of a score range of the same origin sample A is greater than an upper limit of the same origin sample B, that is, video quality of the same origin sample A is better than that of the same origin sample B, a quality rank label A - B MOS rank label is 1. For example, for a sample No. 3 and a sample No. 4 in FIG. 8, a lower limit of the sample No. 3 is significantly greater than an upper limit of the sample No. 4, so that a quality rank label of a training sample group including the sample No. 3 and the sample No. 4 is 1. In a case that an upper limit of a score range of the same origin sample A is less than a lower limit of the same origin sample B, that is, video quality of the same origin sample A is worse than that of the same origin sample B, a quality rank label A - B MOS rank label is -1. For example, for a sample No. 5 and a sample No. 6 in FIG. 8, an upper limit of the sample No. 5 is significantly less than a lower limit of the sample No. 6, so that a quality rank label of a training sample group including the sample No. 5 and the sample No. 6 is -1. In a case that there is another case, it indicates that score ranges of the same origin sample A and the same origin sample B overlap, so that quality of the same origin sample A and the same origin sample B is subjectively difficult to distinguish, and the quality ranking label is 0. For example, in a case that the sample No. 1 and the sample No. 2 in FIG. 8 overlap, the quality rank label of the training sample group including the sample No. 1 and the sample No. 2 is 0.

To further simplify a label calculation process, the quality rank label of each training sample group may be determined by a difference between the video quality real values of the two same origin samples included. In other words, in a case that the difference between the video quality real values of the same origin sample A and the same origin sample B is greater than a preset upper limit threshold, the quality rank label of the training sample group is 1. In a case that the difference between the video quality real values of the same origin sample A and the same origin sample B is less than a preset lower limit threshold, the quality rank label of the training sample group is -1. Otherwise, the quality rank label of the training sample group is 0. Values of the preset upper limit threshold and the preset lower limit threshold may respectively be, for example, 1 and -1, Certainly, may alternatively be other possible values. This is not limited in the embodiment of the present disclosure.

As an example of determining the quality rank loss value of the training sample group based on the difference between the video quality assessment values of the two video playback samples as well as the quality rank real value, in a case that A - B MOS rank label is 1 or -1, *rank_loss* may be calculated by using the following Formula (4):

$$rank\_loss = \max\left(\text{m} - \text{diff}_{\text{AB}_{\text{pred}}} * \text{GT}, 0\right) \tag{4}$$

diff_AB_pred is the difference between the video quality assessment values of the two video playback samples in the same training sample group. GT is the quality rank label, that is the foregoing A - B MOS rank label, max represents taking a maximum value. m is a deviation tolerance, for example, may be set to 0.9.

In a case that A - B MOS rank label is 0, *rank_loss* may be calculated by using the following Formula (5):

$$rank\_loss = \text{maax}\left(-(1 - \text{m}) - \text{diff}_{\text{AB}_{\text{pred}}} * (1 - \text{GT}),\right.$$

$$\left. -(1 - \text{m}) - \text{diff}_{\text{AB}_{\text{pred}}} * (-1 - \text{GT}), 0\right) \tag{5}$$

diff_AB_pred is the difference between the video quality assessment values of the two video playback samples in the same training sample group. GT is the quality rank label, that is the foregoing A - B MOS rank label, max represents taking a maximum value. m is a deviation tolerance, for example, may be set to 0.9.

FIG. 9 is a diagram of variation of *rank_loss* with diff_AB_pred at different GT values. In a case that GT is 1 and a difference between video quality assessment values of two video playback samples in the same training sample group is greater than 0.9, *rank_loss* is 0, and a greater negative difference indicates a greater *rank_loss.* In a case that GT is -1 and a difference between video quality assessment values of two video playback samples in the same training sample group is less than -0.9, *rank_loss* is 0, and a greater positive difference indicates a greater *rank_loss.* In a case that GT is 0 and a difference between video quality assessment values of two video playback samples in the same training sample group is located between [-0.1, 0.1], *rank_loss* is 0, and a greater bidirectional difference indicates a greater *rank_loss.*

The following describes the quality classification loss value *classffication_loss* in Formula (1).

Considering that in an actual scenario, the video quality assessment values are usually divided into grades, for example, into five grades [1, 2, 3, 4, 5]. Therefore, a process of model learning quality scoring is also a classification problem to a specific extent, so that classification loss may be added to constrain during final outputting of a full connection layer of the model. The quality classification loss value may be determined based on a difference between a video quality real value and a video quality assessment value of each video playback sample.

As an example of determining the quality classification loss value based on a difference between a video quality real value and a video quality assessment value of each video playback sample, classification_loss may be calculated by using the following Formula (6):

$$classification\_loss = \max(0, |f(x_i) - y_i| - \text{margin}) \tag{6}$$

$y_i$ indicates a video quality real value of a video playback sample. $f(x_i)$ indicates a video quality assessment value of a video playback sample. margin is a deviation tolerance. For example, taking margin as 0.5, it means that if $|f(x_i) - y_i| < 0.5$, loss = 0, that is, there is no classification loss, the video quality assessment values are accurately classified.

In some embodiments, in each iteration process, video playback samples may also be inputted in batches. To accelerate convergence, batch linear loss (plcc_loss) may also be added to constrain each batch training, so that the model loss value in step 604 may also be calculated by the following Formula (7):

$$Loss = l_1\_loss + 0.5 rank\_loss + 0.001 classffication\_loss + 0.02 plcc\_loss \tag{7}$$

$l_1\_loss$ indicates the quality assessment loss value of the video playback samples in the training sample group. *rank_loss* indicates the quality rank loss value. *classffication_loss* indicates the quality classification loss value. plcc_loss indicates the batch linear loss. A weighting coefficient of each item in the foregoing formula may be a debugged empirical value. Certainly, another possible value may also be adjusted according to a situation. This is not limited in the embodiment of the present disclosure.

The following describes plcc_loss.

In the embodiment of the present disclosure, a determining process of plcc_loss includes: determining a first mean value of video quality real values of a plurality of video playback samples inputted in this batch, and determining a second mean value of video quality assessment values of the inputted plurality of video playback samples; performing the following processing on each of the video playback samples: determining a first difference between a video quality real value of the video playback sample and the first mean value, and determining a second difference between a video quality assessment value of the video playback sample and the second mean value; and determining a batch linear loss value of each video playback sample based on a first difference value and a second difference value corresponding to the video playback sample.

For example, the following Formula (8) may be used to calculate plcc_loss:

$$plcc\_loss = \frac{\sum_{i=1}^{N}(f(x_i) - \overline{f(x_i)})(y_i - \overline{y_i})}{\sqrt{\sum_{i=1}^{N}(f(x_i) - \overline{f(x_i)})^2}\sqrt{\sum_{i=1}^{N}(y_i - \overline{y_i})^2}} \tag{8}$$

$y_i$ indicates a video quality real value of a video playback sample. $f(x_i)$ indicates a video quality assessment value of a video playback sample. $\overline{y}$ indicates the first mean value of the video quality real values of the video playback samples inputted in this batch. $\overline{f(x)}$ indicates the second mean value of the video quality assessment values of the video playback samples inputted in this batch. N is a quantity of the video playback samples inputted in this batch.

Step 605: Determine whether the video quality assessment model satisfies a convergence condition.

Step 606: If the determined result in step 605 is "No", perform model parameter update based on the model loss value, and use an updated video quality assessment model to enter a next training process until the video quality assessment model satisfies the convergence condition. The training process ends if the determination result of step 605 is "Yes".

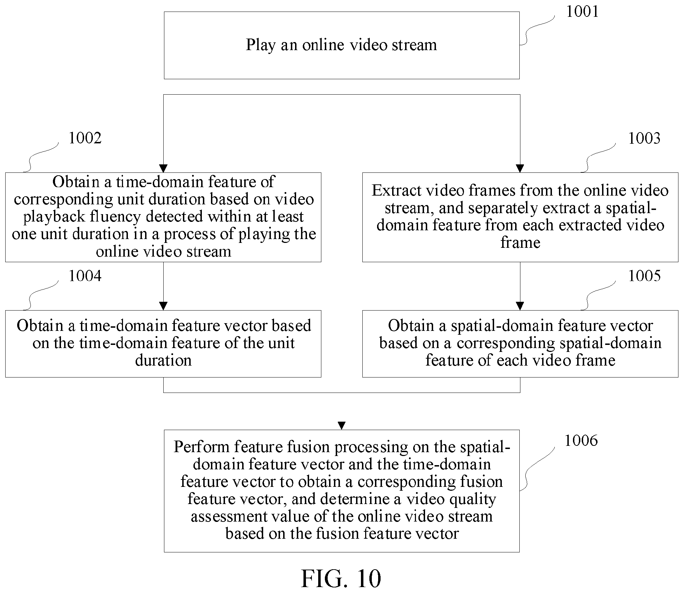

Heretofore, the training process of the video quality assessment model ends. After a trained video quality assessment model is engineered and an online interface is designed and tested, the trained video quality assessment model may be used in video quality assessment in actual scenarios, that is, enter the model application stage. Therefore, an embodiment of the present disclosure further provides a video quality assessment method. FIG. 10 is a schematic flowchart of the video quality assessment method. The flow of the method includes the following step 1001 to step 1006.

Step 1001: Play an online video stream.

During online video quality assessment, the online video stream is received and played in real time. In other words, in a case that a video receive end receives video data in this video communication process, the online video stream is played based on the video data.

Step 1002: Obtain a time-domain feature of corresponding time interval based on video playback fluency detected within at least one time interval in a process of playing the online video stream.

The time-domain feature includes a time-domain fluency feature. The time-domain feature within the time interval is used for representing video playback fluency detected within the time interval.

In all embodiments, a time-domain feature of corresponding time interval is obtained preferably based on video playback fluency detected within each time interval in a process of playing the online video stream.

In all embodiments, step 1002 may be preferably implemented by the following manner: performing the following processing on each time interval: determining the video playback fluency within the time interval based on a difference between a video frame played in the time interval and a video frame played in at least one historical time interval closest to the time interval; and marking the time interval based on the video playback fluency to obtain the time-domain feature to the corresponding time interval, the time-domain feature of the time interval being marked as a first value in a case that it is determined that the video playback fluency is smooth, and the time-domain feature of the time interval being marked as a second value in a case that it is determined that the video playback fluency is freezing.

In a possible implementation, for each time interval, the following operations are performed to determine a freezing result (that is, fluency, detected video playback fluency). Using the current time interval as an example, the freezing result (that is, whether freezing occurs) within the current time interval may be determined based on a difference between a video frame played in the current time interval and a video frame played in at least one historical time interval closest to the current time interval. For example, a currently played video frame is compared with a video frame played in previous time interval to obtain a frame difference between the two video frames, and the frame difference after being binarized is compared with a preset frame difference threshold. If the binarized frame difference is less than the frame difference threshold, it indicates that the front frame and the next frame are the same, and it is determined that freezing occurs, otherwise it is determined to be smooth.

Further, the current time interval is marked based on the freezing result of whether there is freezing to obtain a corresponding time-domain feature. A first value is marked in a case that it is determined that a freezing result is smooth. A second value is marked in a case that it is determined that a freezing result is freezing.

The current video playback fluency is detected to generate a time-domain feature of the current time interval within each time interval in a process of playing an online video stream. To be specific, it is necessary to determine whether freezing occurs in the current video stream. If freezing occurs, the current frame is a freezing frame, and the current frame is marked as the second value. If no freezing occurs, the current frame is a smooth frame, and the current frame is marked as the first value. The "frame" here does not refer to a video frame, but a time frame in a time domain. To be specific, time is divided into a plurality of frames in the time domain.

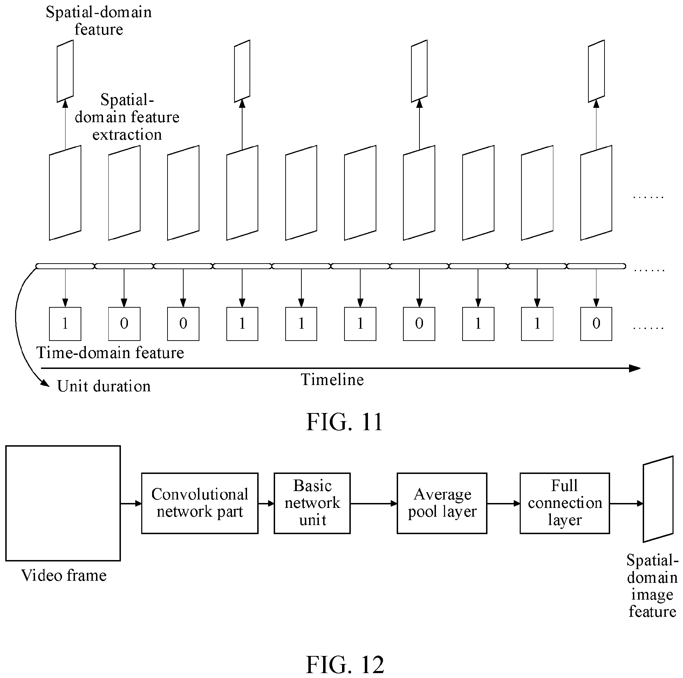

FIG. 11 is a schematic diagram of performing spatial-domain and time-domain feature extraction. In FIG. 11, an example in which each time interval is display duration of a video frame is used. In a process of playing an online video stream, fluency of each time interval is detected. The video frame is marked as 1 in a case that the video frame is a smooth frame, and the video frame is marked as 0 in a case that the video frame is a freezing frame. For example, in FIG. 11, the video frame is smooth within the first time interval, so that the video frame is marked as 1. Freezing occurs in the second time interval and the third time interval, so that video frames are marked as 0 within the second time interval and the third time interval, and so on.

Step 1003: Extract video frames from the online video stream, and separately extract a spatial-domain feature from each extracted video frames.

The spatial-domain feature includes a spatial-domain image feature.

In some embodiments, spatial-domain feature extraction is separately performed on each extracted video frame (that is, a plurality of video frames or all video frames) to obtain a corresponding spatial-domain feature of each video frame.

Refer to FIG. 11. In the process of playing the online video stream, frame extraction processing is performed on the video stream. For example, the frame extraction processing may be performed by using a manner of randomly extracting frames at equal intervals. An example in which the online video stream is played frame-by-frame is used. In the embodiment of the present disclosure, a video clip of the online video stream may be obtained, and then frame extraction processing and spatial-domain feature extraction are performed on the video clip.

It is considered that an online scoring logic is different from that of offline training. In other words, data is not inputted as a whole video but inputted frame by frame. Therefore, to reduce online occupancy, after extraction and spatial-domain feature extraction are performed on a video frame, video frame extraction and spatial-domain feature extraction are performed again in a case that a frame interval reaches a set duration threshold.

In all embodiments, spatial-domain feature extraction processing of step 1003 may be preferably implemented by the following manner: performing the following processing on any one of the video frames: performing basic feature extraction on the video frame by a convolutional neural network unit to obtain an initial feature map of the video frame; inputting the initial feature map to a plurality of consecutive basic mobile network units; performing hierarchical feature extraction by using a plurality of consecutive basic mobile network units; and determining the spatial-domain feature based on a feature map outputted by the last basic mobile network unit.

In all embodiments, spatial-domain feature extraction processing of step 1003 may be preferably implemented by the following manner: performing the following processing on each video frame: performing basic feature extraction on the video frame by a convolutional neural network unit to obtain an initial feature map of the video frame; inputting the initial feature map to a plurality of consecutive basic mobile network units; performing hierarchical feature extraction by using a plurality of consecutive basic mobile network units; and determining the spatial-domain feature based on a feature map outputted by the last basic mobile network unit.

In all embodiments, spatial-domain feature extraction processing of step 1003 may be preferably implemented by the following manner: separately performing the following processing on the plurality of video frames (that is, some video frames in all video frames): performing basic feature extraction on the video frame by a convolutional neural network unit to obtain an initial feature map of the video frame; inputting the initial feature map to a plurality of consecutive basic mobile network units; performing hierarchical feature extraction by using a plurality of consecutive basic mobile network units; and determining the spatial-domain feature based on a feature map outputted by the last basic mobile network unit.

Basic feature extraction is performed on the video frame by a convolutional neural network unit to obtain an initial feature map of the video frame. The initial feature map outputted by the convolutional neural network is inputted to a plurality of consecutive basic mobile network units. In other words, the initial feature map outputted by the convolutional neural network is input of the plurality of consecutive basic mobile network units. Hierarchical feature extraction is performed on the initial feature map by using the plurality of consecutive basic mobile network units. In other words, any one of the plurality of consecutive basic mobile network units performs feature extraction on the feature map inputted to any one of the basic mobile network units. Output of any one of the basic mobile network units is used as input of the next mobile network unit to implement hierarchical feature extraction. Input of the first basic mobile network unit is the initial feature map. The spatial-domain feature is determined based on a feature map outputted by the last basic mobile network unit.

An example in which a MobileNet-v3-small model is used as a spatial-domain feature extraction model is used. FIG. 12 is a schematic diagram of a structure of the MobileNet-v3-small model. The MobileNet-v3-small model includes a convolutional neural network unit, a basic network (bneck) unit, an average pool (avg_pool) layer, and a full connection layer. There may be a plurality of bneck units. In actual application, in the embodiment of the present disclosure, first front seven layers may be selected as the spatial-domain feature extraction model. For each video frame, a process of spatial-domain feature extraction includes the following processing. Using a video frame as an example, basic feature extraction is performed on the video frame by using the convolutional neural network unit to obtain an initial feature map of the video frame. Further, the initial feature map is inputted to the bneck unit, and after the feature map outputted by the bneck unit is processed through the avg_pool layer and the full connection layer, a spatial-domain feature is obtained. Certainly, the feature map outputted by the bneck unit may alternatively be used as the spatial-domain feature directly.

In all embodiments, the following processing is preferably performed by using each basic mobile network unit: performing dimensionality augmentation processing on a feature map inputted to the basic mobile network unit to obtain a first intermediate feature map, preferably performing depthwise separable convolution processing on the first intermediate feature map to obtain a second intermediate feature map, preferably further performing attention mechanism-based processing on the second intermediate feature map to obtain a third intermediate feature map, and preferably further performing residual processing on the third intermediate feature map and the feature map inputted to the basic mobile network unit to obtain a feature map outputted by the basic mobile network unit.

For example, the following processing is performed by using each basic mobile network unit: performing dimensionality augmentation processing on a feature map inputted to the basic mobile network unit to obtain a first intermediate feature map, performing depthwise separable convolution processing on the first intermediate feature map to obtain a second intermediate feature map, performing attention mechanism-based processing on the second intermediate feature map to obtain a third intermediate feature map, and performing residual processing on the third intermediate feature map and the feature map inputted to the basic mobile network unit to obtain a feature map outputted by the basic mobile network unit.

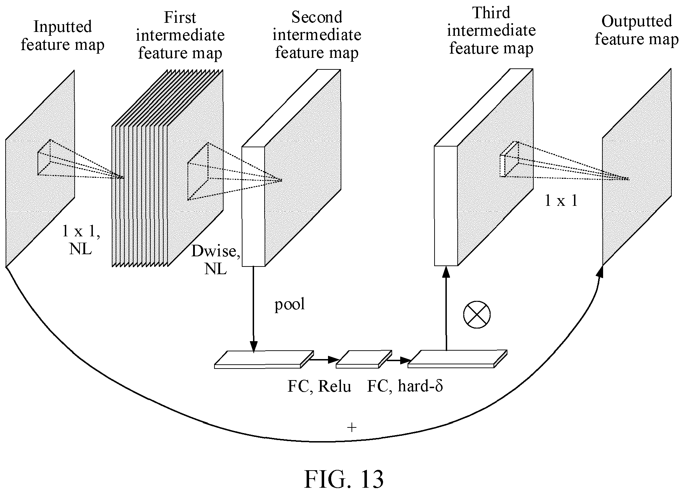

FIG. 13 is a schematic diagram of a structure of each bneck unit. The bneck unit has characteristics, such as the inverted residual with linear bottleneck, depthwise separable convolutions, light attention mechanism, and the use of h-swish activation function. For example, refer to FIG. 13. After a feature map is inputted, dimensionality augmentation processing is performed on the inputted feature map by using a $1 \times 1$ convolution to obtain a first intermediate feature map, and then subsequent operations are performed. A $3 \times 3$ depthwise separable convolution operation is performed on the first intermediate feature map to obtain a second intermediate feature map. Light attention mechanism processing is performed on the second intermediate feature map to obtain a third intermediate feature map, and residual processing is performed, by using the inverted residual with linear bottleneck, on the third intermediate feature map and the feature map inputted to the basic mobile network unit to obtain an outputted feature map. The light attention mechanism works by adjusting a weight of each channel, and in the foregoing processes, in a case that the activation function is related, a h-swish activation function is used, thereby reducing computing amount and improving performance. The inputted feature map of the first bneck unit is an initial feature map, and the inputted feature map of the subsequent bneck unit is an outputted feature map of the previous bneck unit.

In all embodiments, basic feature extraction being performed on a video frame by using the convolutional neural network unit may be preferably implemented by the following manner: obtaining image data corresponding to a grayscale value channel from image data of a plurality of channels corresponding to the video frame, the plurality of channels including the gray-scale value channel and a chroma channel; and performing basic feature extraction on the image data corresponding to the gray-scale value channel by using the convolutional neural network unit to obtain the initial feature map.

Considering that being applied to a video receive end, in a case that accuracy is not greatly affected, it is better that a less and faster computing amount of the online model. In addition, actual online data is a bare stream in a YUV format, and additional computational overhead is needed to convert a format, so that performance, a size of the application model, and an actual online data source are considered comprehensively. Therefore, in the embodiment of the present disclosure, in a case that spatial-domain feature extraction is performed, the feature extraction is directly performed on a Y channel of a video stream in the YUV format. For example, an inputted size is 360 x 360, so that a small loss of accuracy exchange for only 1/3 of original computing amounts. Therefore, in a case that spatial-domain feature extraction is performed on a video frame, image data corresponding to a gray-scale value channel is obtained from image data of a plurality of channels corresponding to the video frame. In a case that the video is in the YUV format, the plurality of channels include a gray-scale value channel and a chroma channel. Further, basic feature extraction is performed on the image data corresponding to the gray-scale value channel by using the convolutional neural network unit to obtain the initial feature map.

Step 1004: Obtain a time-domain feature vector based on the time-domain feature of the time interval.

The time-domain feature vector is obtained based on respective corresponding time-domain features of a plurality of time interval or all time interval. The plurality of time interval is part of all time interval.

In all embodiments, step 1004 may be preferably implemented by the following manner: arranging each of the time-domain features (that is, respective corresponding time-domain features of a plurality of time interval or all time interval) in an order of the corresponding time interval to obtain a time-domain feature sequence; collecting statistics about respective corresponding values of a plurality of time-domain feature parameters from the time-domain feature sequence; and obtaining the time-domain feature vector based on the respective values of the plurality of time-domain feature parameters.

As an example of obtaining the time-domain feature sequence, in the embodiment of the present disclosure, to improve computing speed, obtained time-domain features may be arranged based on the order of the corresponding time interval by marking a smooth frame as 1 and a freezing frame as 0 to obtain the time-domain feature sequence as input of time-domain data. As shown in FIG. 11, a "1001110110" binary data stream (that is, the time-domain feature sequence) may be formed, and then feature extraction is performed on the binary data stream to obtain the time-domain feature vector sequence.

As an example of collecting statistics about respective corresponding values of a plurality of time-domain feature parameters, a rule may be collected statistic based on set feature values. Statistics about respective corresponding values of the plurality of time-domain feature parameters are collected from the time-domain feature sequence. The time-domain feature vector is obtained based on the respective values of the plurality of time-domain feature parameters.

For example, the time-domain feature parameters may include at least one of the following parameters.

(1) Single freezing duration, using "1001110110" as an example, freezing occurs three times, the first freezing lasts for two-time interval, and the second freezing and third freezing last for one-time interval. Then, duration of each freezing may be determined based on the quantity of freezing times and a time length of each time interval. After statistics about each freezing duration is collected, processing may also be performed on each freezing duration. For example, longest freezing duration is selected as a value of the dimension, or a mean value of each freezing duration is calculated as a value of the dimension.

(2) Long freezing duration. A long freezing event refers to an event in which freezing duration exceeds a long freezing threshold. Duration corresponding to the long freezing event is long freezing duration. The long freezing threshold may be measured experimentally. For example, the freezing duration being greater than one second belongs to a long freezing event. Similarly, after each long freezing duration is obtained, longest duration is selected as a value of the dimension, or a mean value of each long freezing duration is calculated as a value of the dimension.

(3) Long freezing times refer to a quantity of times that the long freezing event occurs.

(4) Short freezing duration. A short freezing event refers to an event in which freezing duration is less than a long freezing threshold but greater that a freezing threshold. Duration corresponding to the short freezing event is short freezing duration. For example, the freezing duration being located a range of [0.2 second, 1 second] belongs to a short freezing event.

(5) Short freezing times refer to a quantity of times that the short freezing event occurs.

Certainly, the embodiment of the present disclosure may further include another possible time-domain feature parameter. This is not limited in the embodiment of the present disclosure.

In a specific application, the time-domain feature sequence may be polled. In a case that a smooth frame is converted to a freezing frame, the single freezing duration increases, a current frame state is changed, and short freezing times are increased. In a case that this freezing is determined as the long freezing, long freezing times are increased (where subsequently the long freezing times are deducted from the short freezing times), a quantity of smooth playback frames is reduced, and a time point in which the freezing event occurs is increased. In a case that the freezing state continues, the single freezing duration is continued to increase, and the quantity of smooth playback frames is reduced. In a case that a freezing frame is converted to a smooth frame, the single freezing duration for one frame is added, and the current frame state is changed.

As an example of obtaining the time-domain feature vector, after the respective values of the plurality of time-domain feature parameters are obtained, the time-domain feature vector may be obtained by splicing the values. Fluency score mapping processing may alternatively performed on the values to obtain the time-domain feature vector. After the time-domain feature sequence is formed, the trained time-domain feature extraction network may alternatively be used to perform feature extraction on the time-domain feature sequence to obtain the time-domain feature vector.

Step 1005: Obtain a spatial-domain feature vector based on a corresponding spatial-domain feature of each video frame.

The spatial-domain feature vector is obtained based on spatial-domain features respectively corresponding to the plurality of video frames or all video frames.

In the embodiment of the present disclosure, a corresponding spatial-domain feature vector is obtained based on each obtained spatial-domain feature by using one of the following manners:

(1) performing splicing processing on the corresponding spatial-domain feature (that is, respective corresponding spatial-domain features of a plurality of video frames or all video frames) of the video frame to obtain the spatial-domain feature vector;

(2) performing averaging processing on the corresponding spatial-domain feature (that is, respective corresponding spatial-domain features of the plurality of video frames or all video frames) of the video frame to obtain the spatial-domain feature vector; or

(3) performing pooling processing on the corresponding spatial-domain feature (that is, respective corresponding spatial-domain features of the plurality of video frames or all video frames) of the video frame to obtain the spatial-domain feature vector.

Using the averaging processing as an example, after the spatial-domain features of all frames are obtained, a mean value is taken as the spatial-domain feature vector. In addition, the embodiment of the present disclosure may further design a full connection layer. A quantity of input nodes of the full connection layer is a quantity of output nodes of a spatial-domain feature extraction model, and a quantity of output nodes of the full connection layer is a quantity of subjective scoring grades, such as five grades.

Step 1006: Perform feature fusion processing on the spatial-domain feature vector and the time-domain feature vector to obtain a corresponding fusion feature vector, and determine a video quality assessment value of the online video stream based on the fusion feature vector.

As an example of determining the video quality assessment value of the online video stream, considering that a time domain is a negative effect factor on the score, the feature fusion processing may be implemented by the following manners: subtracting the time-domain feature vector from the spatial-domain feature vector to obtain the fusion feature vector; and inputting the fusion feature vector into the full connection layer to finally output the video quality assessment value.

In all embodiments, step 1006 may be preferably implemented by the following manner: performing feature scaling processing on the time-domain feature vector to obtain a scaled time-domain feature vector, the dimension of the scaled time-domain feature vector being consistent with a dimension of the spatial-domain feature vector; obtaining the fusion feature vector based on a difference between the spatial-domain feature vector and the scaled time-domain feature vector; and inputting the fusion feature vector into a full connection layer, and performing full connection processing on the fusion feature vector by using the full connection layer to obtain the video quality assessment value.

Refer to FIG. 5. Considering that dimensions of the time-domain feature vector and the spatial-domain feature vector are inconsistent, feature scaling processing may be performed on the time-domain feature vector, so that the dimension of the time-domain feature vector is consistent with the dimension of the spatial-domain feature vector. Then, a difference of the spatial-domain feature vector and a scaled time-domain feature vector is used as the fusion feature vector. The fusion feature vector is inputted into a full connection layer, and full connection processing is performed on the fusion feature vector by using the full connection layer to obtain the video quality assessment value.

As an example of the feature fusion processing, in the embodiment of the present disclosure, weights may further be set for the spatial-domain feature vector and the time-domain feature vector, respectively, and then weighted summation is performed based on the weights to obtain the fusion feature vector.

The quantity of input nodes of the full connection layer is the quantity of output nodes of an upper layer (that is, the quantity of subjective scoring grades), and the quantity of output nodes is 1, that is, the video quality assessment value.

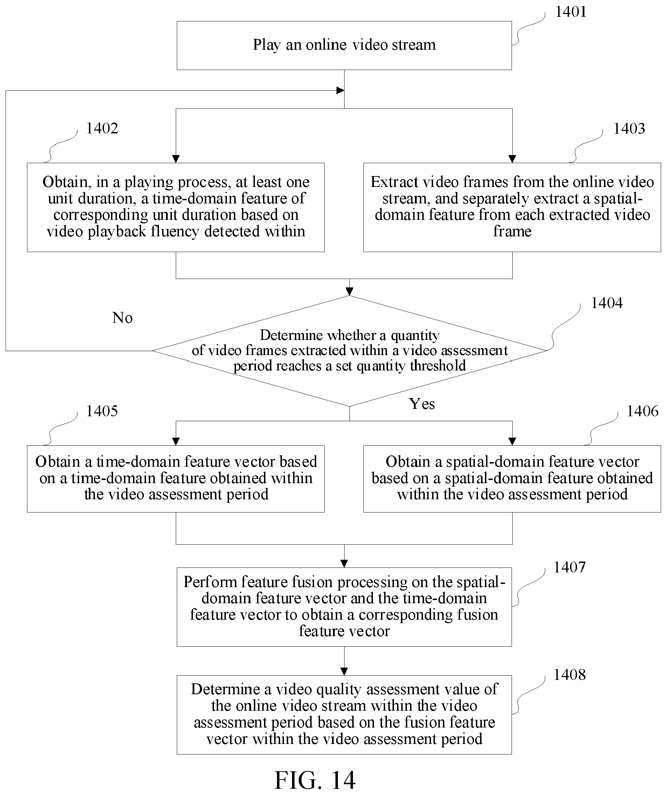

In the embodiments of the present disclosure, considering that quality assessment is performed on the online video stream, video data is inputted frame by frame, video playback samples with short duration may be used in the training phase, but a length of the online video stream cannot be predicted. In addition, considering real time of the assessment, the overall assessment cannot be performed after the entire video completely ends, so that an entire video process needs to be assessed in segments. Therefore, FIG. 14 is another schematic flowchart of a video quality assessment method of an online video stream according to an embodiment of the present disclosure.

Step 1401: Play an online video stream.

Step 1402: Obtain a time-domain feature of corresponding time interval based on video playback fluency detected within at least one time interval in a playing process.

Step 1403: Extract video frames from the online video stream, and separately extract a spatial-domain feature from each extracted video frames.

Step 1404: Determine whether a quantity of video frames extracted within a video assessment period reaches a set quantity threshold.

In the embodiment of the present disclosure, the video quality is assessed based on the video assessment period. In other words, an assessment process is performed on a video clip, so that it is necessary to determine whether the current video assessment period ends.

The video assessment period may be preset according to an actual assessment requirement. For example, in a case that the video quality needs to be assessed every second, the video assessment period is set to every second. In a case that video quality assessment needs to be performed every 10 frames, the video assessment period is set to a quantity of extracted frames from the online video stream.

For example, it may be determined whether the quantity of extracted frames reaches a threshold. For example, in a case that the quantity of extracted frames in a video assessment period is set to N frames, it is determined whether the quantity of extracted video frames in the current video assessment period reaches N frames. If N frames are not reached, steps 1402 and 1403 are performed.

Step 1405: In a case that the quantity of video frames extracted within the video assessment period reaches the set quantity threshold, obtain the time-domain feature vector based on time-domain features obtained within the video assessment period.

In all embodiments, step 1405 may be preferably implemented by the following manner: arranging each of the time-domain features (that is, respective corresponding time-domain features of a plurality of time interval or all time interval) obtained within the video assessment period in an order of the corresponding time interval to obtain a time-domain feature sequence; collecting statistics about respective corresponding values of a plurality of time-domain feature parameters from the time-domain feature sequence; and obtaining the time-domain feature vector based on the respective values of the plurality of time-domain feature parameters.

As an example of obtaining the time-domain feature vector, after the respective values of the plurality of time-domain feature parameters are obtained, the time-domain feature vector may be obtained by splicing the values. Fluency score mapping processing may alternatively performed on the values to obtain the time-domain feature vector. After the time-domain feature sequence is formed, the trained time-domain feature extraction network may alternatively be used to perform feature extraction on the time-domain feature sequence to obtain the time-domain feature vector.

Step 1406: Obtain a spatial-domain feature vector based on the spatial-domain features obtained within the video assessment period.

In the embodiment of the present disclosure, a corresponding spatial-domain feature vector is obtained, based on each spatial-domain feature obtained within the video assessment period, by using one of the following manners:

(1) performing splicing processing on the corresponding spatial-domain feature (that is, respective corresponding spatial-domain features of a plurality of video frames or all video frames) of the video frame to obtain the spatial-domain feature vector;

(2) performing averaging processing on the corresponding spatial-domain feature (that is, respective corresponding spatial-domain features of the plurality of video frames or all video frames) of the video frame to obtain the spatial-domain feature vector; or

(3) performing pooling processing on the corresponding spatial-domain feature (that is, respective corresponding spatial-domain features of the plurality of video frames or all video frames) of the video frame to obtain the spatial-domain feature vector.

Using the averaging processing as an example, after the spatial-domain features of all frames are obtained within the video assessment period, a mean value is taken as the spatial-domain feature vector.

Step 1407: Perform feature fusion processing on the spatial-domain feature vector and the time-domain feature vector to obtain a corresponding fusion feature vector.

Step 1408: Determine the video quality assessment value of the online video stream within the video assessment period based on the fusion feature vector within the video assessment period.

The foregoing steps have some similarities with the embodiment shown in FIG. 10. For the similarities, refer to the foregoing description. Details are not described herein again.

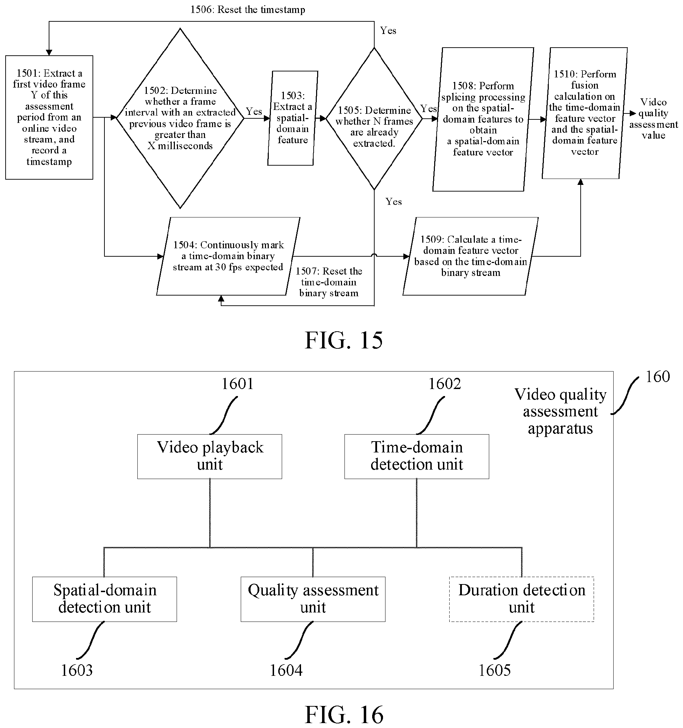

Next, refer to FIG. 15. A specific example is used to describe an assessment process of an online video stream. To reduce online occupancy, a video quality assessment model is divided into two parts (a part 1 and a part 2) at an original spatio-temporal fusion point for calculation.

Step 1501: Extract a first video frame Y of this assessment period from an online video stream, and record a timestamp.

Step 1502: Determine whether a frame interval with an extracted previous video frame is greater than X milliseconds.

Step 1503: Extract a spatial-domain feature for the video frame Y if the frame interval is greater than X milliseconds.

The spatial-domain feature may be an image quality score value. Alternatively, the spatial-domain feature may be, for example, a quality grade. In other words, the quality grade is divided into five grades based on a score value, and each grade corresponds to a scoring range.

Step 1504: Continuously mark a time-domain binary stream at 30 fps expected.

Step 1505: Determine whether N frames are already extracted. If yes, perform steps 1506 to 1509. If no, continue to extract frames.

Step 1506: Reset the timestamp.

For example, the timestamp is reset to 0.

Step 1507: Reset the time-domain binary stream.

For example, the time-domain binary stream is reset to a full 1 binary data stream.

Step 1508: Perform splicing processing on the spatial-domain features to obtain a spatial-domain feature vector.

The image quality score mean value within the period may alternatively be calculated by using a manner of a mean value.

Step 1509: Calculate a time-domain feature vector based on the time-domain binary stream.

Step 1510: Perform fusion calculation on the time-domain feature vector and the spatial-domain feature vector to obtain a video quality assessment value within the period.

The foregoing steps have some similarities with the embodiment shown in FIG. 10, and refer to the foregoing description. Details are not described herein again.

The video quality assessment method in the embodiment of the present disclosure is deployed on a video receive end and only quality of a large picture window that a user is concerned about (such as video quality of a largest window during a conference) is scored. A real-time score of a large picture is reported in the video process with a feedback every nine seconds. At the end of the conference, an average score of the entire conference and consecutive low-quality times (less than 2.25 points for 10 consecutive times) are reported. An accuracy metric comparable to a large model is obtained with a small quantity of parameters, fast speed, and small computational resource occupation that meets an application constraint.

To sum up, in the method of the embodiments of the present disclosure, features of an online video stream in both spatial-domain and time-domain dimensions are taken into account, and the features in the two dimensions are integrated to express video quality of the online video stream, so that accuracy of video quality assessment is improved. In addition, the embodiments of the present disclosure further implement real-time quality assessment of the online video stream, to improve real-time performance of quality assessment on the online video stream and facilitate assisting of optimization of the online video stream. In addition, by optimizing the model, such as Y channel data input, a time-domain feature extraction model, and a spatial-domain feature extraction model, occupation of resources such as a central processing unit (CPU) can be controlled within 2% when the video quality assessment model is used in.

The embodiment of the present disclosure verifies an effect of the method in the embodiment of the present disclosure by comparing with another model. In an experiment, the foregoing obtained training data set is used. Training to testing ratio is selected to be 0.8/0.2. ResNet-18 is used as a baseline for VQA and is compared with the video quality assessment model (including a quantization-aware training step, spatial-domain sampling N = 12) provided in the embodiment of the present disclosure. A comparison result is as follows:

Table 1

|  | Common VQA | Present disclosure |
|---|---|---|
| Baseline | ResNet-18 | Video quality assessment model |
| Input a size | Input an original size | Cut to 360 × 360 |
| Input channel | RGB 3 channel | Y channel |
| Input level | Input frame by frame, each frame having the same MOS as a video to which the frame belongs | Input videos one by one, each video having a total MOS |
| Input a feature map | Spatial-domain feature only | Spatial-domain feature and time-domain feature |
| Loss function | L1-Loss | Loss |
| Test output | Scores of each frame | Scores of each video |
| File size at client | 46.47 Mbit | 423.69 kilobit |
| PLCC/SRCC/RMSE | retrain: 0.936/0.939/0.330 (where there is data leakage due to frame shuffling, so that an actual value is to be low) | 0.941/0.940/0.350 |
| Prediction time (10s video) | Time 15s | 1.15s |
| CPU occupy | CPU > 5% | CPU 1.5-1.8% |

It may be learned from Table 1, a video quality assessment algorithm in the embodiment of the present disclosure obtains an accuracy metric comparable to a large model with a small quantity of parameters, fast speed, and small CPU occupation that meets an application constraint. In addition, an actual application scenario pays special attention to low-quality video detection. The MOS is divided into grades, such as (1, 2.25] for low quality, (2.25, 3.75] for medium quality, and (3.75, 5] for high quality to determine a misdetermining rate of a high score misdetermined as a low score and 1 an omission rate of a low score misdetermined as a high score. Through verification, the algorithm in the embodiment of the present disclosure has a low-quality misdetermining rate of close to 0, and an omission rate is about 0.8%. A misdetermining rate of another algorithm is about 0.5, and an omission rate is about 1.6%. Clearly, the technical solution of the present disclosure is a common algorithm.

The technical solution of the embodiment of the present disclosure may be applied to a real-time video communication application background for video quality assessment. For example, an average assessment score of an online conference may be detected, and a change of an assessment value of a specific device may be detected. With reference to other reported data (such as a device network state), reasons for a quality change may be excluded or roughly analyzed.

Refer to FIG. 16. Based on the same inventive concept, an embodiment of the present disclosure further provides a video quality assessment apparatus 160. The apparatus includes:

a video playback unit 1601, configured to play an online video stream; a time-domain detection unit 1602, configured to obtain a time-domain feature of corresponding time interval based on video playback fluency detected within at least one time interval in a process of playing the online video stream; a spatial-domain detection unit 1603, configured to extract video frames from the online video stream, and separately extract a spatial-domain feature from each extracted video frame, the time-domain detection unit 1602 being further configured to obtain a time-domain feature vector based on the time-domain feature of the time interval, and the spatial-domain detection unit 1603 being further configured to obtain a spatial-domain feature vector based on a corresponding spatial-domain feature of each video frame; and a quality assessment unit 1604, configured to perform feature fusion processing on the spatial-domain feature vector and the time-domain feature vector to obtain a corresponding fusion feature vector, and determine a video quality assessment value of the online video stream based on the fusion feature vector.

In all embodiments, the apparatus further preferably includes a duration detection unit 1605, configured to determine whether a quantity of video frames extracted within a video assessment period reaches a set quantity threshold. The time-domain detection unit 1602 is further configured to: in a case that the quantity of video frames extracted within the video assessment period reaches the set quantity threshold, obtain the time-domain feature vector based on time-domain features obtained within the video assessment period. The spatial-domain detection unit 1603 is further configured to obtain the spatial-domain feature vector based on spatial-domain features obtained within the video assessment period. The quality assessment unit 1604 is further configured to determine the video quality assessment value within the video assessment period based on the fusion feature vector within the video assessment period.

In all embodiments, the spatial-domain detection unit 1603 is further preferably configured to: perform the following processing on any one of the video frames: perform basic feature extraction on the video frame by using a convolutional neural network unit to obtain an initial feature map of the video frame; and input the initial feature map to a plurality of consecutive basic mobile network units; perform the following processing by using each basic mobile network unit: perform dimensionality augmentation processing on a feature map inputted to the basic mobile network unit to obtain a first intermediate feature map, preferably perform depthwise separable convolution processing on the first intermediate feature map to obtain a second intermediate feature map, preferably further perform attention mechanism-based processing on the second intermediate feature map to obtain a third intermediate feature map, and preferably further perform residual processing on the third intermediate feature map and the feature map inputted to the basic mobile network unit to obtain a feature map outputted by the basic mobile network unit; and determine the spatial-domain feature based on a feature map outputted by the last basic mobile network unit.

In all embodiments, the spatial-domain detection unit 1603 is preferably further configured to: obtain image data corresponding to a gray-scale value channel from image data of a plurality of channels corresponding to the video frame, the plurality of channels including the gray-scale value channel and a chroma channel; and perform basic feature extraction on the image data corresponding to the gray-scale value channel by using the convolutional neural network unit to obtain the initial feature map.

In all embodiments, the spatial-domain detection unit 1603 is preferably further configured to: perform one of the following processing: perform splicing processing on the corresponding spatial-domain feature of the video frame to obtain the spatial-domain feature vector; perform averaging processing on the corresponding spatial-domain feature of the video frame to obtain the spatial-domain feature vector; or perform pooling processing on the corresponding spatial-domain feature of the video frame to obtain the spatial-domain feature vector.

In all embodiments, the time-domain detection unit 1602 is further preferably configured to: perform the following processing on each time interval: determine the video playback fluency within the time interval based on a difference between a video frame played in the time interval and a video frame played in at least one historical time interval closest to the time interval; and mark the time interval based on the video playback fluency to obtain the time-domain feature of the corresponding time interval, the time-domain feature of the time interval being marked as a first value in a case that it is determined that the video playback fluency is smooth, and the time-domain feature of the time interval being marked as a second value in a case that it is determined that the video playback fluency is freezing.

In all embodiments, the time-domain detection unit 1602 is further preferably configured to: arrange each of the time-domain features in an order of the corresponding time interval to obtain a time-domain feature sequence; collect statistic about respective corresponding values of a plurality of time-domain feature parameters from the time-domain feature sequence; and obtain the time-domain feature vector based on the respective values of the plurality of time-domain feature parameters.

In all embodiments, the quality assessment unit 1604 is further preferably configured to: perform feature scaling processing on the time-domain feature vector to obtain a scaled time-domain feature vector, a dimension of the scaled time-domain feature vector being consistent with a dimension of the spatial-domain feature vector; obtain the fusion feature vector based on a difference between the spatial-domain feature vector and the scaled time-domain feature vector; and input the fusion feature vector into a full connection layer, and perform full connection processing on the fusion feature vector by using the full connection layer to obtain the video quality assessment value.

According to the foregoing apparatus, in the method of the embodiments of the present disclosure, features of an online video stream in both spatial-domain and time-domain dimensions are taken into account, and the features in the two dimensions are integrated to express video quality of the online video stream, so that accuracy of video quality assessment is improved. In addition, the embodiments of the present disclosure further implement real-time quality assessment of the online video stream, to improve real-time performance of quality assessment on the online video stream and facilitate assisting of optimization of the online video stream.

The apparatus may be configured to perform the video quality assessment method shown in the embodiments of the present disclosure. Therefore, for the functions that can be implemented by functional modules of the apparatus, which are not described herein again, refer to the descriptions of the foregoing embodiments.

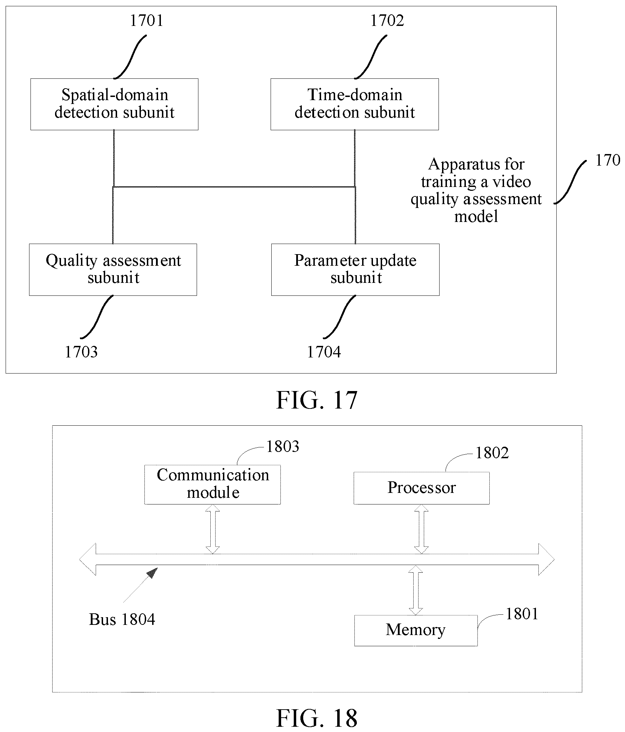

Refer to FIG. 17. Based on the same inventive concept, an embodiment of the present disclosure further provides an apparatus for training a video quality assessment model 170. The apparatus is configured to perform a plurality of times of iterative training on the video quality assessment model by using a plurality of video playback samples, including:

a spatial-domain detection subunit 1701, configured to extract video frames from inputted video playback samples, separately perform spatial-domain feature extraction on the extracted video frames to obtain corresponding spatial-domain features, and obtain a corresponding spatial-domain feature vector based on each obtained spatial-domain feature; a time-domain detection subunit 1702, configured to obtain a time-domain feature of corresponding time interval based on playback fluency within each time interval in the inputted video playback samples, and obtain a time-domain feature vector based on each obtained time-domain feature; a quality assessment subunit 1703, configured to perform feature fusion processing on the spatial-domain feature vector and the time-domain feature vector to obtain a corresponding fusion feature vector, and determine a video quality assessment value based on the fusion feature vector; and a parameter update subunit 1704, configured to determine a model loss value based on video quality real values and video quality assessment values of the plurality of video playback samples, and perform model parameter update based on the model loss value.

In all embodiments, the plurality of video playback samples are preferably obtained by recording an original video stream played by a video receive end under different video distortion simulation environments. The apparatus may further be configured to perform a plurality of times of iterative training on the video quality assessment model based on a plurality of training sample groups constructed by the plurality of video playback samples. Each training sample group includes two video playback samples originating from the same original video stream but with different video distortion simulation environment;

The parameter update subunit 1704 is further configured to determine the model loss value based on video quality real values and video quality assessment values of the video playback samples in each training sample group.

In all embodiments, the parameter update subunit 1704 is further preferably configured to: determine a quality assessment loss value based on a video quality real value and a video quality assessment value of each video playback sample; determine a quality rank real value of the training sample group based on video quality real values of two video playback samples in each training sample group, and determine a quality rank loss value based on a difference between video quality assessment values of the two video playback samples as well as the quality rank real value; determine a quality classification loss value based on a difference between a video quality real value and a video quality assessment value of each video playback sample; and determine the model loss value based on the quality assessment loss value, the quality rank loss value, and the quality classification loss value.

In all embodiments, the parameter update subunit 1704 is further preferably configured to: determine a first mean value of the video quality real values of the plurality of video playback samples, and determine a second mean value of the video quality assessment values of the plurality of video playback samples; perform the following processing on each of the video playback samples: determine a first difference between a video quality real value of the video playback sample and the first mean value, and determine a second difference between a video quality assessment value of the video playback sample and the second mean value; determine a batch linear loss value of each video playback sample based on a first difference value and a second difference value corresponding to the video playback sample; and determine the model loss value based on the batch linear loss value.

According to the foregoing apparatus, the idea of ranking learning is used. This can exclude a situation in which the model only learns monotonous quality information in video content, and a result is caused to be inaccurate. For example, content may be the same but predicted quality is different.

The apparatus may be configured to perform the method for training a video quality assessment model shown in the embodiments of the present disclosure. Therefore, for the functions that can be implemented by functional modules of the apparatus, which are not described herein again, refer to the descriptions of the foregoing embodiments.

Refer to FIG. 18. Based on the same technical concept, embodiments of the present disclosure also provide a computer device. In an embodiment, the computer device may be the server shown in FIG. 1. The computer device, as shown in FIG. 18, includes a memory 1801, a communication module 1803, and one or more processors 1802.

The memory 1801 is configured to store a computer program executed by the processor 1802. The memory 1801 may mainly include a program storage area and a data storage area. The program storage area may store an operating system, a program required for running an instant messaging function, and the like. The data storage area may store various instant messaging information, operation instruction sets, and the like.

The memory 1801 may be a volatile memory such as a random-access memory (RAM). The memory 1801 may alternatively be a non-volatile memory such as a read-only memory, a flash memory, a hard disk drive (HDD), or a solid-state drive (SSD). Alternatively, the memory 1801 is any other medium that can be used to carry or store expected program codes in a form of instructions or a data structure and that can be accessed by a computer, but is not limited thereto. The memory 1801 may be a combination of the foregoing memories.

The processor 1802 may include one or more central processing units (CPU), a digital processing unit, or the like. The processor 1802 is configured to implement the foregoing video quality assessment method and the method for training a video quality assessment model when calling the computer program stored in the memory 1801.

The communication module 1803 is configured to communicate with a terminal device and another server.

A specific connection medium between the memory 1801, the communication module 1803, and the processor 1802 is not limited in embodiments of the present disclosure. In embodiments of the present disclosure, in FIG. 18, the memory 1801 and the processor 1802 are connected via a bus 1804. The bus 1804 is described in a bold line in FIG. 18. A connection manner between other components is merely an example for description, and is not limited thereto.

The bus 1804 may be classified into an address bus, a data bus, a control bus, and the like. For ease of description, only one bold line is used to describe the bus in FIG. 18, but this does not mean that there is only one bus or only one type of bus.

A computer storage medium is stored in the memory 1801, and computer executable instructions are stored in the computer storage medium. The computer executable instructions are used for implementing the foregoing video quality assessment method and the method for training a video quality assessment model of embodiments of the present disclosure, and the processor 1802 is configured to perform the foregoing video quality assessment method and the method for training a video quality assessment model of the foregoing embodiments.

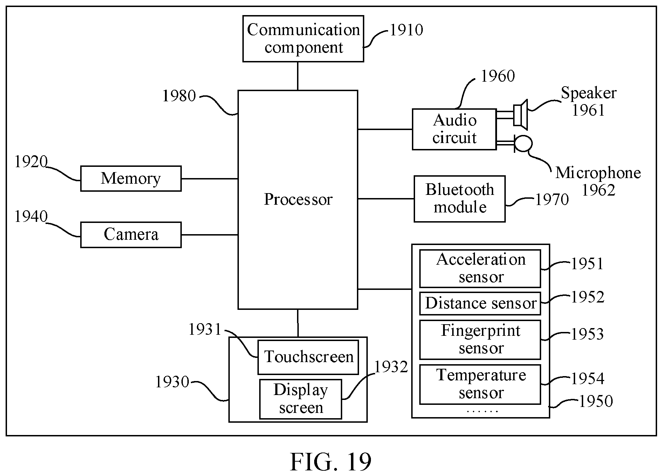

In another embodiment, the computer device may alternatively be a terminal device, such as the terminal device shown in FIG. 1. In this embodiment, the structure of the computer device may be as shown in FIG. 19, including: a communication component 1910, a memory 1920, a display unit 1930, a camera 1940, a sensor 1950, an audio circuit 1960, a Bluetooth module 1970, a processor 1980, and other components.

The communication component 1910 is configured to communicate with the server. In some embodiments, a circuit wireless fidelity (Wi-Fi) module may be included. The Wi-Fi module belongs to a short-distance wireless transmission technology, and the computer device can help a user send and receive information via the Wi-Fi module.

The memory 1920 may be configured to store a software program and data. The processor 1980 runs the software program and the data stored in the memory 1920, to implement various functions and data processing of the terminal device. The memory 1920 may include a high-speed random access memory, and may further include a non-volatile memory such as at least one magnetic disk storage device, a flash memory device, or another volatile solid storage device. The memory 1920 stores an operating system that enables the terminal device to run. In the present disclosure, the memory 1920 may store the operating system and various application programs, and may also store codes that execute the foregoing video quality assessment method and the method for training a video quality assessment model of embodiments of the present disclosure.

The display unit 1930 may also be configured to display information inputted by the user or information provided to the user and a graphical user interface (GUI) of various menus of the terminal device. Specifically, the display unit 1930 may include a display screen 1932 disposed on the front of the terminal device. The display screen 1932 may be configured in a form of a liquid crystal display, an organic light-emitting diode, and the like. The display unit 1930 may be configured to display a video stream interface and a display interface of a video quality assessment result in embodiments of the present disclosure.

The display unit 1930 may also be configured to receive inputted digit or character information, and generate a signal input related to the user setting and function control of the terminal device. Specifically, the display unit 1930 may include a touchscreen 1931 disposed on the front of the terminal device, and a user's touch operation on or near the touchscreen 1931 may be collected, such as tapping a button and dragging a scroll box.

The touchscreen 1931 may be overlaid on the display screen 1932. Alternatively, the touchscreen 1931 and the display screen 1932 may be integrated to achieve input and output functions of the terminal device, and may be referred to as a touch display screen after integration. In the present disclosure, the display unit 1930 may display an application program and a corresponding operation step.

The camera 1940 may be configured to capture a static image, and the user may post a comment on the image captured by the camera 1940 through the application. There may be one or more cameras 1940. An optical image of an object generated through a lens is projected to a photosensitive element. The photosensitive element may be a charge coupled device (CCD) or a complementary metal-oxide-semiconductor (CMOS) phototransistor. The photosensitive element converts an optical signal into an electrical signal, and then transmits the electrical signal to the processor 1980. The processor 1980 converts the electrical signal into a digital image signal.

The terminal device may also include at least one sensor 1950, such as an acceleration sensor 1951, a distance sensor 1952, a fingerprint sensor 1953, and a temperature sensor 1954. The terminal device may also be configured with another sensor such as a gyroscope, a barometer, a hygrometer, a thermometer, an infrared sensor, a light sensor, and a motion sensor.

The audio circuit 1960, a speaker 1961, and a microphone 1962 may provide audio interfaces between the user and the terminal device. The audio circuit 1960 may convert received audio data into an electric signal and transmit the electric signal to the speaker 1961. The speaker 1961 converts the electric signal into a sound signal and output the sound signal. The terminal device may also be configured with a volume button to adjust a volume of the sound signal. The microphone 1962 converts a collected sound signal into an electrical signal. The audio circuit 1960 receives the electrical signal, converts the electrical signal into audio data, and outputs the audio data to the communication component 1910 to be transmitted to, for example, another terminal device, or outputs the audio data to the memory 1920 for further processing.

The Bluetooth module 1970 is configured to perform information interaction with another Bluetooth device having a Bluetooth module based on a Bluetooth protocol. For example, the terminal device may establish a Bluetooth connection with a wearable computer device (such as a smartwatch) that also has a Bluetooth module via the Bluetooth module 1970 to perform data exchange.

The processor 1980 is a control center of the terminal device, and is connected to various parts of the terminal by using various interfaces and lines. By running or executing the software program stored in the memory 1920 and invoking data stored in the memory 1920, various functions and data processing of the terminal device is performed. In some embodiments, the processor 1980 may include one or more processing units. The processor 1980 may also integrate an application processor and a baseband processor. The application processor mainly processes an operating system, a user interface, an application program, and the like. The baseband processor mainly processes wireless communication. The foregoing baseband processor may either not be integrated into the processor 1980. In the present disclosure, the processor 1980 may run the operating system, the application program, user interface display, touch response, and the video quality assessment method and the method for training a video quality assessment model in the embodiments of the present disclosure. In addition, the processor 1980 is coupled with the display unit 1930.

Based on the same inventive concept, embodiments of the present disclosure also provide a storage medium that stores a computer program. The computer program, when running on a computer, enables the computer to perform steps in the video quality assessment method and the method for training a video quality assessment model according to various exemplary implementations of the present disclosure described in this specification.

In some possible implementations, various aspects of the video quality assessment method and the method for training a video quality assessment model provided in the present disclosure may also be implemented in a form of a computer program product, including a computer program. When the program product is run on a computer device, the computer program is used for enabling the computer device to perform the steps in the video quality assessment method and the method for training a video quality assessment model according to various exemplary implementations of the present disclosure described in this specification. For example, the computer device may perform the steps of each embodiment.

The program product may be any combination of one or more readable mediums. The readable medium may be a readable signal medium or a readable storage medium. The readable storage medium may be, for example, but is not limited to, electric, magnetic, optical, electromagnetic, infrared, or semiconductor systems, apparatuses, or devices, or any combination thereof. More specific example (a non-exhaustive list) of the readable storage medium include: an electrical connection having one or more wires, a portable disk, a hard disk, a random access memory (RAM), a read-only memory (ROM), an erasable programmable ROM (EPROM or a flash memory), an optical fiber, a compact disc ROM (CD-ROM), an optical storage device, a magnetic storage device, or any appropriate combination thereof.

The program product of implementations of the present disclosure may adopt the portable compact disc read-only memory (CD-ROM) and include the computer program, and may be run on the computer device. However, the program product in the present disclosure is not limited thereto. In the present disclosure, the readable storage medium may be any tangible medium including or storing a program, and the computer program stored may be used by or used in combination with a command execution system, an apparatus, or a device.

The readable signal medium may include a data signal that is in a baseband or transmitted as a part of a carrier, and the data signal carries a readable computer program. A data signal propagated in such a way may assume a plurality of forms, including, but not limited to, an electromagnetic signal, an optical signal, or any appropriate combination thereof. The readable signal medium may alternatively be any readable medium other than a readable storage medium, and the readable medium may be used to send, propagate, or transmit a program used by or in combination with a command execution system, apparatus, or device.

The computer program included in the readable medium may be transmitted by using any suitable medium, including, but not limited to, wireless, wired, an optical cable, RF, or any appropriate combination thereof.

The computer program for performing the operation of the present disclosure may be written by using any combination of one or more programming languages. The programming language includes an object-oriented programming language such as Java and C++, and includes a conventional procedural programming language such as a "C" Language or a similar programming language.

Although several units or subunits of the apparatus are mentioned in the foregoing detailed descriptions, the division is merely illustrative not mandatory. Actually, according to the implementations of the present disclosure, the features and functions of two or more units described above may be specifically implemented in one unit. On the contrary, the features and functions of one unit described above may be further divided to be embodied by a plurality of units.

In addition, although the steps of the method in the present disclosure are described in a specific order in the accompanying drawings, this does not require or imply that the steps are bound to be performed in the specific order, or all the operations shown are bound to be performed to achieve the expected result. Additionally or alternatively, some steps may be omitted, a plurality of steps may be combined into one step for execution, and/or one step may be decomposed into a plurality of steps for execution.

A person skilled in the art is to be understood that embodiments of the present disclosure may be provided as a method, a system, or a computer program product. Therefore, the present disclosure may use a form of hardware-only embodiments, software-only embodiments, or embodiments combining software and hardware. Moreover, the present disclosure may use a form of a computer program product that is implemented on one or more computer-usable storage media (including but not limited to a magnetic disk storage, a CD-ROM, an optical memory, and the like) that include computer-usable program code.

Although exemplary embodiments of the present disclosure have been described, a person skilled in the art who knows the basic inventive concept can make additional changes and modifications to these embodiments. Therefore, the following claims are intended to be construed as to cover the exemplary embodiments and all changes and modifications falling within the scope of the present disclosure.

Clearly, a person skilled in the art can make various modifications and variations to the present disclosure without departing from the spirit and scope of the present disclosure. In this way, provided that these modifications and variations made to the present disclosure fall within the scope of the claims of the present disclosure and equivalent techniques thereof, the present disclosure is also intended to cover such modifications and variations.

**Claims**

1. A video quality assessment method, executable by a computer device, and comprising:

    playing an online video stream;
    obtaining a time-domain feature of at least one time interval based on a video playback fluency level detected within the at least one time interval within a playback duration of the online video stream;
    extracting video frames from the online video stream, and extracting a spatial-domain feature from each of the extracted video frames;
    obtaining a time-domain feature vector based on the time-domain feature of the at least one time interval, and obtaining a spatial-domain feature vector based on the spatial-domain feature of each of the extracted video frames; and
    performing feature fusion processing on the spatial-domain feature vector and the time-domain feature vector to obtain a fusion feature vector, and determining a video quality assessment value of the online video stream based on the fusion feature vector.

2. The method according to claim 1, the method further comprising:

    determining whether a quantity of video frames extracted within a video assessment period reaches a set quantity threshold;
    the obtaining a time-domain feature vector based on the time-domain feature of the at least one time interval, and obtaining a spatial-domain feature vector based on the spatial-domain feature of each of the extracted video frames comprising:

        in a case that the quantity of video frames extracted within the video assessment period reaches the set quantity threshold, obtaining the time-domain feature vector based on time-domain features obtained within the video assessment period, and obtaining the spatial-domain feature vector based on spatial-domain features obtained within the video assessment period; and
        the determining a video quality assessment value of the online video stream based on the fusion feature vector comprising:
        determining the video quality assessment value within the video assessment period based on the fusion feature vector within the video assessment period.

3. The method according to claim 1, wherein the extracting a spatial-domain feature from each of the extracted video frames comprises:
   performing the following processing on any one of the video frames:

    performing basic feature extraction on the video frame by using a convolutional neural network unit to obtain an initial feature map of the video frame;
    inputting the initial feature map to a plurality of consecutive basic mobile network units;
    performing the following processing by using each basic mobile network unit: performing dimensionality augmentation processing on a feature map inputted to the basic mobile network unit to obtain a first intermediate feature map, performing depthwise separable convolution processing on the first intermediate feature map to obtain a second intermediate feature map, performing attention mechanism-based processing on the second intermediate feature map to obtain a third intermediate feature map, and performing residual processing on the third intermediate feature map and the feature map inputted to the basic mobile network unit to obtain a feature map outputted by the basic mobile network unit; and
determining the spatial-domain feature based on a feature map outputted by the last basic mobile network unit.

4.  The method according to claim 3, wherein the performing basic feature extraction on the video frame by using a convolutional neural network unit to obtain an initial feature map of the video frame comprises:

obtaining image data corresponding to a gray-scale value channel from image data of a plurality of channels corresponding to the video frame, the plurality of channels comprising the gray-scale value channel and a chroma channel; and
performing basic feature extraction on the image data corresponding to the gray-scale value channel by using the convolutional neural network unit to obtain the initial feature map.

5.  The method according to any one of claims 1 to 4, wherein the obtaining a spatial-domain feature vector based on the spatial-domain feature of each of the extracted video frames comprises:
performing one of the following processing:

performing splicing processing on the spatial-domain feature of the extracted video frame to obtain the spatial-domain feature vector;
performing averaging processing on the spatial-domain feature of the extracted video frame to obtain the spatial-domain feature vector; or
performing pooling processing on the spatial-domain feature of the extracted video frame to obtain the spatial-domain feature vector.

6.  The method according to claim 1, wherein the obtaining a time-domain feature of at least one time interval based on a video playback fluency level detected within the at least one time interval comprises:
performing the following processing on each time interval:

determining the video playback fluency level within the time interval based on a difference between a video frame played in the time interval and a video frame played in at least one historical time interval closest to the time interval; and
marking the time interval based on the video playback fluency level to obtain the time-domain feature of the time interval, the time-domain feature of the time interval being marked as a first value in a case that it is determined that the video playback fluency level indicates smooth, and the time-domain feature of the time interval being marked as a second value in a case that it is determined that the video playback fluency level indicates freezing.

7.  The method according to claims 1 or 6, wherein the obtaining a time-domain feature vector based on the time-domain feature of the at least one time interval comprises:

arranging each of the time-domain features in an order of the time interval to obtain a time-domain feature sequence;
collecting statistic about respective values of a plurality of time-domain feature parameters from the time-domain feature sequence; and
obtaining the time-domain feature vector based on the respective values of the plurality of time-domain feature parameters.

8.  The method according to claim 1, wherein the performing feature fusion processing on the spatial-domain feature vector and the time-domain feature vector to obtain a fusion feature vector, and determining a video quality assessment value of the online video stream based on the fusion feature vector comprises:

performing feature scaling processing on the time-domain feature vector to obtain a scaled time-domain feature vector, a dimension of the scaled time-domain feature vector being consistent with a dimension of the spatial-domain feature vector;
obtaining the fusion feature vector based on a difference between the spatial-domain feature vector and the scaled time-domain feature vector; and
inputting the fusion feature vector into a full connection layer, and performing full connection processing on the fusion feature vector by using the full connection layer to obtain the video quality assessment value.

9. A method for training a video quality assessment model, applied to a computer device, and comprising:
performing iterative training on the video quality assessment model by using a plurality of video playback samples, performing the following operations at each time of iterative training:

extracting video frames from inputted video playback samples, extracting a spatial-domain feature from each of the extracted video frames to obtain spatial-domain features, and obtaining a time-domain feature of at least one time interval based on a playback fluency level within each of the at least one time interval in the inputted video playback samples;
obtaining a spatial-domain feature vector based on each of the obtained spatial-domain feature, and obtaining a time-domain feature vector based on each of the obtained time-domain feature;
performing feature fusion processing on the spatial-domain feature vector and the time-domain feature vector to obtain a fusion feature vector, and determining a video quality assessment value based on the fusion feature vector; and
determining a model loss value based on video quality real values and video quality assessment values of the plurality of video playback samples, and performing model parameter update based on the model loss value.

10. The method according to claim 9, wherein

the plurality of video playback samples are obtained by recording an original video stream played by a video receive end under different video distortion simulation environments, and
the performing iterative training on the video quality assessment model by using a plurality of video playback samples comprises:

performing iterative training on the video quality assessment model based on a plurality of training sample groups constructed by the plurality of video playback samples, each training sample group comprising two video playback samples originating from a same original video stream but with different video distortion simulation environments; and
the determining a model loss value based on video quality real values and video quality assessment values of the plurality of video playback samples comprises:
determining the model loss value based on video quality real values and video quality assessment values of video playback samples in each training sample group.

11. The method according to claim 10, wherein the determining the model loss value based on video quality real values and video quality assessment values of the video playback sample in each training sample group comprises:

determining a quality assessment loss value based on a video quality real value and a video quality assessment value of each video playback sample;
determining a quality rank real value of the training sample group based on video quality real values of two video playback samples in each training sample group, and determining a quality rank loss value based on a difference between video quality assessment values of the two video playback samples as well as the quality rank real value;
determining a quality classification loss value based on a difference between a video quality real value and a video quality assessment value of each video playback sample; and
determining the model loss value based on the quality assessment loss value, the quality rank loss value, and the quality classification loss value.

12. The method according to claims 10 or 11, wherein the determining the model loss value based on video quality real values and video quality assessment values of the video playback sample in each training sample group comprises:

determining a first mean value of the video quality real values of the plurality of video playback samples, and determining a second mean value of the video quality assessment values of the plurality of video playback samples;
performing the following processing on each of the video playback samples: determining a first difference between a video quality real value of the video playback sample and the first mean value, and determining a second difference between a video quality assessment value of the video playback sample and the second mean value;
determining a batch linear loss value of each video playback sample based on a first difference value and a second difference value corresponding to the video playback sample; and

determining the model loss value based on the batch linear loss value.

13. A video quality assessment apparatus, comprising:

> a video playback unit, configured to play an online video stream;
> a time-domain detection unit, configured to obtain a time-domain feature of at least one time interval based on a video playback fluency level detected within the at least one time interval within a playback duration of the online video stream;
> a spatial-domain detection unit, configured to extract video frames from the online video stream, and extract a spatial-domain feature from each of the extracted video frames,
> the time-domain detection unit being further configured to obtain a time-domain feature vector based on the time-domain feature of the at least one time interval, and
> the spatial-domain detection unit being further configured to obtain a spatial-domain feature vector based on the spatial-domain feature of each of the extracted video frames; and
> a quality assessment unit, configured to perform feature fusion processing on the spatial-domain feature vector and the time-domain feature vector to obtain a fusion feature vector, and determine a video quality assessment value of the online video stream based on the fusion feature vector.

14. An apparatus for training a video quality assessment model, comprising:
a model training unit, configured to perform iterative training on the video quality assessment model by using a plurality of video playback samples, the model training unit comprising:

> a spatial-domain detection subunit, configured to extract video frames from inputted video playback samples, extract a spatial-domain feature from each of the extracted video frames to obtain spatial-domain features, and obtain a spatial-domain feature vector based on each of the obtained spatial-domain features;
> a time-domain detection subunit, configured to obtain a time-domain feature of at least one time interval based on a playback fluency level within each of the at least one time interval in the video playback samples, and obtain a time-domain feature vector based on each of the obtained time-domain features;
> a quality assessment subunit, configured to perform feature fusion processing on the spatial-domain feature vector and the time-domain feature vector to obtain a fusion feature vector, and determine a video quality assessment value based on the fusion feature vector; and
> a parameter update subunit, configured to determine a model loss value based on video quality real values and video quality assessment values of the plurality of video playback samples, and perform model parameter update based on the model loss value.

15. A computer device, comprising a memory, a processor, and a computer program that is stored in the memory and runs on the processor, and the processor, when executing the computer program, implementing operations of the method according to any one of claims 1 to 8 or 9 to 12.

16. A computer program product, comprising a computer program, the computer program being stored in a computer-readable storage medium, and a processor of a computer device, when reading and executing the computer program from the computer-readable storage medium, implementing operations of the method according to any one of claims 1 to 8 or 9 to 12.

FIG. 1

```
┌──────────────────────────────────────────────────┐
│  ┌─────────────────────────────────────────┐      │
│  │ Collect original videoconferencing scenario│     │ ┐
│  │            sample data                    │      │ │ Training
│  └─────────────────────────────────────────┘      │ │ data set
│                     │                             │ │ collection
│  ┌─────────────────────────────────────────┐      │ │ stage
│  │      Add network distortion data         │      │ │
│  └─────────────────────────────────────────┘      │ │
│                     │                             │ │
│  ┌─────────────────────────────────────────┐      │ │
│  │ Perform manual assessment and data cleansing│   │ │
│  │ of assessment data on a video playback sample│  │ ┘
│  └─────────────────────────────────────────┘      │
└──────────────────────────────────────────────────┘
```

```
Collect original videoconferencing scenario sample data
        ↓
Add network distortion data                              Training data set collection stage
        ↓
Perform manual assessment and data cleansing
of assessment data on a video playback sample
        ↓
Perform iterative training on a designed initial          Model algorithm design stage
video quality assessment model, and test a
trained video quality assessment model
        ↓
Engineer the video quality assessment model,             Online engineering stage
and design and test an online interface
        ↓
Officially launch video quality assessment               Online assessment stage
        ↓
Problem feedback and optimization
```

Model training stage

Model application stage

FIG. 2

Obtain a plurality of video playback samples — 301

Extract video frames from inputted video playback samples, and separately perform spatial-domain feature extraction on each extracted video frame to obtain a corresponding spatial-domain feature — 302

Obtain a time-domain feature of corresponding unit duration based on playback fluency within each unit duration in the inputted video playback samples — 304

Obtain a corresponding spatial-domain feature vector based on each obtained spatial-domain feature — 303

Obtain a corresponding time-domain feature vector based on each obtained time-domain feature — 305

Perform feature fusion processing on the spatial-domain feature vector and the time-domain feature vector to obtain a corresponding fusion feature vector, and determine a video quality assessment value based on the fusion feature vector — 306

Determine a model loss value based on video quality real values and video quality assessment values of the plurality of video playback samples — 307

Determine whether a video quality assessment model satisfies a convergence condition — 308

No

Perform model parameter update based on the model loss value — 309

FIG. 3

Network
distortion
simulation 402

Video transmit
end 410

Original sample
data

Video receive
end 403

Distortion sample data

Recording of a video
recording tool

Video playback
sample

FIG. 4

FIG. 5

Obtain a plurality of video playback samples by recording an original video stream played by a video receive end under different video distortion simulation environments

601

Construct a plurality of training sample groups based on the plurality of video playback samples, each training sample group including two video playback samples originating from the same original video stream but with different video distortion simulation environments

602

Perform forward propagation on video playback samples included in inputted training sample groups by using a video quality assessment model to obtain a video quality assessment value of each video playback sample

603

Determine a model loss value based on video quality real values and video quality assessment values of the video playback samples in each training sample group

604

Determine whether the video quality assessment model satisfies a convergence condition

605

No

606

Perform model parameter update based on the model loss value

FIG. 6

FIG. 7

FIG. 8

FIG. 9

Play an online video stream _/ 1001

1002

Obtain a time-domain feature of corresponding unit duration based on video playback fluency detected within at least one unit duration in a process of playing the online video stream

1003

Extract video frames from the online video stream, and separately extract a spatial-domain feature from each extracted video frame

1004

Obtain a time-domain feature vector based on the time-domain feature of the unit duration

1005

Obtain a spatial-domain feature vector based on a corresponding spatial-domain feature of each video frame

1006

Perform feature fusion processing on the spatial-domain feature vector and the time-domain feature vector to obtain a corresponding fusion feature vector, and determine a video quality assessment value of the online video stream based on the fusion feature vector

FIG. 10

Spatial-domain
feature

Spatial-
domain feature
extraction

Time-domain feature

Unit duration                                          Timeline

## FIG. 11

Video frame → Convolutional network part → Basic network unit → Average pool layer → Full connection layer → Spatial-domain image feature

## FIG. 12

Inputted feature map

First intermediate feature map

Second intermediate feature map

Third intermediate feature map

Outputted feature map

1 x 1, NL

Dwise, NL

pool

FC, Relu   FC, hard-δ

1 x 1

⊗

+

FIG. 13

Play an online video stream — 1401

Obtain, in a playing process, at least one unit duration, a time-domain feature of corresponding unit duration based on video playback fluency detected within — 1402

Extract video frames from the online video stream, and separately extract a spatial-domain feature from each extracted video frame — 1403

No

Determine whether a quantity of video frames extracted within a video assessment period reaches a set quantity threshold — 1404

Yes

Obtain a time-domain feature vector based on a time-domain feature obtained within the video assessment period — 1405

Obtain a spatial-domain feature vector based on a spatial-domain feature obtained within the video assessment period — 1406

Perform feature fusion processing on the spatial-domain feature vector and the time-domain feature vector to obtain a corresponding fusion feature vector — 1407

Determine a video quality assessment value of the online video stream within the video assessment period based on the fusion feature vector within the video assessment period — 1408

FIG. 14

1506: Reset the timestamp

1501: Extract a first video frame Y of this assessment period from an online video stream, and record a timestamp

1502: Determine whether a frame interval with an extracted previous video frame is greater than X milliseconds

Yes

1503: Extract a spatial-domain feature

1505: Determine whether N frames are already extracted.

Yes

1508: Perform splicing processing on the spatial-domain features to obtain a spatial-domain feature vector

1510: Perform fusion calculation on the time-domain feature vector and the spatial-domain feature vector

Video quality assessment value

Yes

1504: Continuously mark a time-domain binary stream at 30 fps expected

1507: Reset the time-domain binary stream

Yes

1509: Calculate a time-domain feature vector based on the time-domain binary stream

FIG. 15

160

Video quality assessment apparatus

1601

Video playback unit

1602

Time-domain detection unit

1603

Spatial-domain detection unit

1604

Quality assessment unit

1605

Duration detection unit

FIG. 16

1701 1702

| Spatial-domain detection subunit | Time-domain detection subunit |
| --- | --- |

Apparatus for training a video quality assessment model

170

| Quality assessment subunit | Parameter update subunit |
| --- | --- |

1703 1704

FIG. 17

1803 1802

| Communication module | | Processor |
| --- | --- | --- |

Bus 1804

| Memory | 1801 |
| --- | --- |

FIG. 18

FIG. 19

## INTERNATIONAL SEARCH REPORT

| International application No. |
| --- |
| **PCT/CN2023/107878** |

| | |
| --- | --- |
| **A.** | **CLASSIFICATION OF SUBJECT MATTER** |
| | H04N 17/00(2006.01)i |
| | According to International Patent Classification (IPC) or to both national classification and IPC |

| **B.** | **FIELDS SEARCHED** |
| --- | --- |

Minimum documentation searched (classification system followed by classification symbols)

IPC：H04N

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; ENTXT; CNKI; IEEE: 视频, 质量, 评估, 时域, 卡顿, 空域, 特征, 融合, 卷积神经网络, 训练, 损失值, video, quality, assess+, evaluat+, time domain, spatial domain, feature, fusion, loss, CNN

**C.    DOCUMENTS CONSIDERED TO BE RELEVANT**

| Category* | Citation of document, with indication, where appropriate, of the relevant passages | Relevant to claim No. |
| --- | --- | --- |
| X | CN 112954312 A (FUZHOU UNIVERSITY) 11 June 2021 (2021-06-11)<br>description, paragraphs [0059]-[0101] | 1-16 |
| X | LI, Bowen et al. "Blindly Assess Quality of In-the-Wild Videos via Quality-Aware Pre-Training and Motion Perception"<br>*IEEE Transactions on Circuits and Systems for Video Technology,*<br>Vol. 32, No. (9), 30 September 2022 (2022-09-30),<br>sections III and IV | 1-16 |
| A | CN 113709453 A (BEIJING CHJ INFORMATION TECHNOLOGY CO., LTD.) 26 November 2021 (2021-11-26)<br>entire document | 1-16 |
| A | CN 112991278 A (SOUTH CHINA UNIVERSITY OF TECHNOLOGY et al.) 18 June 2021 (2021-06-18)<br>entire document | 1-16 |
| A | US 2022103869 A1 (NETFLIX INC.) 31 March 2022 (2022-03-31)<br>entire document | 1-16 |

☐ Further documents are listed in the continuation of Box C.        ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **07 November 2023** | **21 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/107878** |

| Patent document cited in search report | | | Publication date (day/month/year) | Patent family member(s) | Publication date (day/month/year) |
| --- | --- | --- | --- | --- | --- |
| CN | 112954312 | A | 11 June 2021 | None | |
| CN | 113709453 | A | 26 November 2021 | None | |
| CN | 112991278 | A | 18 June 2021 | None | |
| US | 2022103869 | A1 | 31 March 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211018116